(19) **Europäisches Patentamt / European Patent Office / Office européen des brevets**

(11) **EP 1 330 785 B1**

(12) **EUROPEAN PATENT SPECIFICATION**

(45) Date of publication and mention
of the grant of the patent:
**21.02.2007 Bulletin 2007/08**

(51) Int Cl.:
**G06T 1/00** (2006.01)

(21) Application number: **01981387.2**

(22) Date of filing: **04.10.2001**

(86) International application number:
**PCT/US2001/031195**

(87) International publication number:
**WO 2002/029718 (11.04.2002 Gazette 2002/15)**

(54) **DYNAMIC DEPTH-OF-FIELD EMULATION BASED ON EYE-TRACKING**

AUF AUGENNACHFÜHRUNG BASIERTE DYNAMISCHE TIEFENSCHÄRFEEMULATION

EMULATION DYNAMIQUE DE PROFONDEUR DE CHAMP BASEE SUR UNE POURSUITE OCULAIRE

(84) Designated Contracting States:
**AT BE CH CY DE DK ES FI FR GB GR IE IT LI LU MC NL PT SE TR**

(30) Priority: **04.10.2000 US 238200 P**

(43) Date of publication of application:
**30.07.2003 Bulletin 2003/31**

(73) Proprietor: **SUN MICROSYSTEMS, INC.**
**Santa Clara, California 95054 (US)**

(72) Inventor: **DEERING, Michael, F.**
**Los Altos, CA 94024 (US)**

(74) Representative: **Harris, Ian Richard**
**D Young & Co**
**120 Holborn**
**London EC1N 2DY (GB)**

(56) References cited:
**WO-A-99/39307**            **US-A- 5 570 433**
**US-A- 6 034 690**

• **ROKITA P: "RENDERING ACCOMMODATION EFFECTS IN VIRTUAL REALITY APPLICATIONS" REAL-TIME IMAGING, ACADEMIC PRESS LIMITED, GB, vol. 1, no. 5, 1 November 1995 (1995-11-01), pages 355-361, XP000543033 ISSN: 1077-2014**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

This invention relates generally to the field of 3-D graphics and, more particularly, to a system and method for rendering and displaying 3-D graphical objects.

Description of the Related Art

The human eye is subject to many of the same optical phenomena as inanimate optical systems. In particular, for any given state of the crystalline lens, there exists a unique distance $d_f$ at which objects appear maximally sharp (i.e. minimally blurred) and an interval of distances around $d_f$ where objects have sufficient clarity. More precisely, the blurriness of objects as a function of distance from the lens varies smoothly and has a minimum at distance $d_f$. The interval of distances over which objects are sufficiently clear is commonly referred to as the depth of field. The depth of field typically increases with increasing focus distance $d_f$.

Muscles (the ciliary body) connected to the crystalline lens may exert pressure on the crystalline lens. The induced deformation of the lens changes the focus distance $d_f$. The extent of lens deformation in response to muscular pressure depends on the elasticity of the lens. The elasticity generally decreases with age. (By age 45, many people will have lost most of their elasticity: ergo bifocals). Thus, the range of focus distances $d_f$ which the human eye can achieve varies with age.

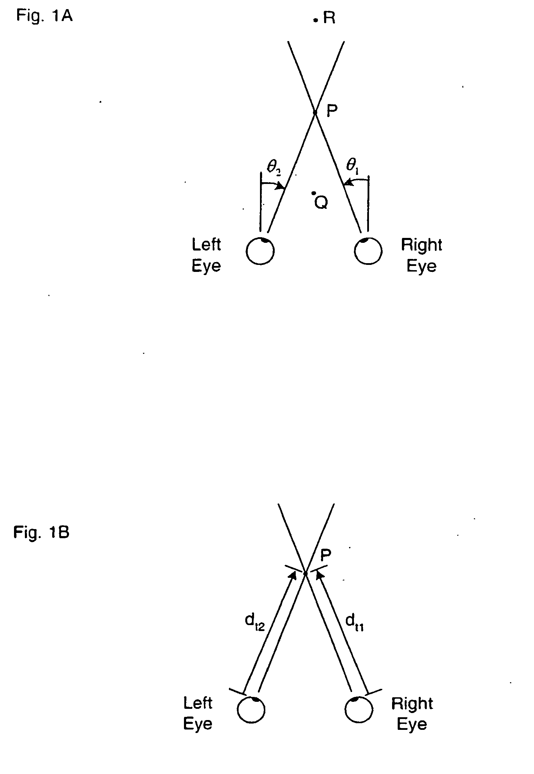

The human visual system has two directionally-controllable eyes located at the front of the head as suggested by Figure 1. The direction of gaze of an eye may be characterized by a ray that emanates from the center of the corresponding macula (the most sensitive portion of the retina) and passes through the center of the corresponding lens. Because each eye gathers a different view on the external world, the brain is able to create a three-dimensional model of the world.

There are brain control systems which control the orientation angles and the focus distances $d_f$ of each eye. These control systems may be responsive to various sources of information including clarity and positional fusion of the images perceived by the right and left eyes. In Figure 1A, the ocular rays intersect at point P. Thus, the image of point P will fall on the center of the perceived visual field of each eye, and the two views on the neighborhood of point P will be fused by the visual cortex into an integrated 3D entity. In contrast, because point Q lies inside the two ocular rays, the right eye perceives the point Q as being to the left of center and the left eye perceives the point Q as being to the right of center. Thus, the brain perceives two images of point Q. Similarly, because point R lies outside the two ocular rays, the right eye perceives the point R as being to the right of center and the left eye perceives the point R as being to the left of center. So the brain perceives two images of point R also.

Let $d_{t1}$ be the distance of the right eye to the intersection point P, and $d_{t2}$ be the distance of the left eye to the intersection point P as illustrated by Figure 1B. If the brain control systems set the focus distance $d_{f1}$ of the right eye equal to distance $d_{t1}$ and the focus distance $d_{f2}$ of the left eye equal to distance $d_{t2}$, the fused image in the center of the field of view will appear maximally clear, and objects closer than and farther than the intersection point will appear increasingly blurry.

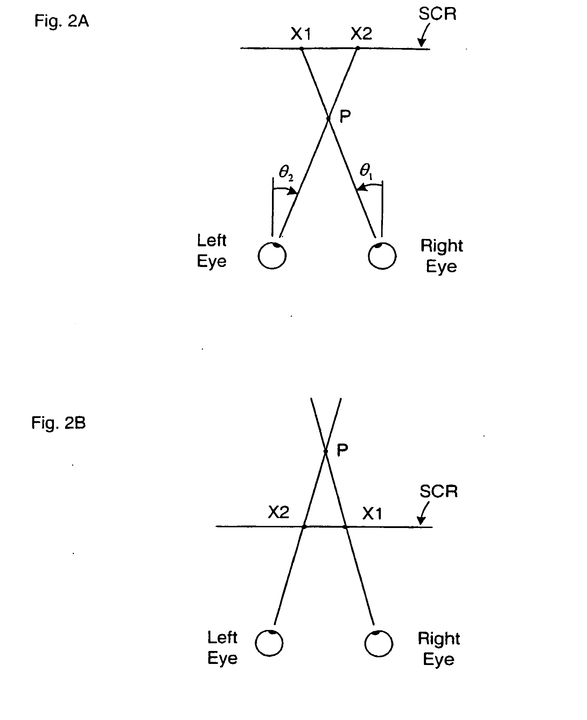

The brain control systems are programmed to strongly favor an assignment of focus distances that correspond respectively to the distances to the intersection point. For most people, it is somewhat difficult even intentionally to achieve focus distances $d_{f1}$ and $d_{f2}$ that are significantly larger than or small than the distances to the intersection point. However, this is exactly the trick that is required for proper perception of Stereo video as suggested by Figures 2A. To create the perception of a three-dimensional object at point P in front of a display screen SCR, the viewer must direct his/her eyes so that the ocular rays intersect at point P. The right ocular ray passes through P and hits the screen at position X1, and the left ocular ray passes through P and hits the screen at position X2. The screen pixels in the neighborhood of position X1 give the right eye's view on the 3D object, and the screen pixels in the neighborhood of position X2 give the left eye's view on the 3D object The clearest perception of the 3D object is obtained if the viewer can focus her eyes beyond the intersection point P to the screen positions X1 and X2. In other words, the right eye should achieve a focus distances $d_{f1}$ equal to the distance of the right eye to screen contact position X1, and the left eye should achieve a focus distance $d_{f2}$ equal to the distance of the left eye to the screen contact position X2. Many viewers find it difficult (or impossible) to override the brain's tendency to focus at the intersection point Focusing at the intersection point P implies that the pixilated images in the neighborhoods of X1 and X2 will appear blurry, and thus, the 3D object generated at point P will appear blurry.

Figure 2B illustrates the complementary situation where an object is to be perceived at point P behind the screen. Again the viewer directs her gaze so the ocular rays intersect at point P. In this case, the clearest perception of the object is obtained if the viewer can achieve focus distances smaller than the distances to the intersection point P, i.e. at screen positions X1 and X2 respectively. Again, if the viewer cannot overcome the tendency to focus (i.e. optically focus) at the intersection point P, the object will appear blurred.

When the viewer looks at some object which resides at the plane of the screen, the eyes intersect at some point on the screen, and the brain can do what it is accustomed to doing: i.e. setting the optical focus distances so they correspond to the intersection point. Thus, objects at (or near) the plane of the screen should appear sharp.

In the real world, the brain's tendency to focus at the intersection point is beneficial and implies the following. As the viewer moves his/her eyes and the ocular intersection point approaches a physical object, the object becomes increasingly fused and increasingly clear at the same time. Thus, the brain is trained to interpret increasing clarity as a elue that the eyes are moving appropriately so as to lack onto an object and decreasing clarity as a clue that the eyes are moving away from locking onto an object.

When the viewer is observing artificially generated objects in response to stereo video, the tendency to focus at the intersection point is disadvantageous. For example, if the user attempts to lock his eyes onto a virtual object in front of screen SCR, the object may become increasingly blurry as the ocular intersection point approaches the spatial position of the virtual object (assuming the eyes are initially directed at some point on the screen). This increasing blur may actually discourage the brain control system from converging the eyes towards the virtual object to the extent where image fusion can occur. Thus, the eyes may sup short of the place where the viewer could begin to see a unified object.

An article by P. Rokita entitled Rendering accommodation effects in virtual reality applications', published in Real Time Imaging, Academic Press Limited, GB, vol. 1, no.5, 1 November 1995, pages 355-361, proposes a solution to the problem of simulating accommodation effects in virtual reality applications and a technique for generating depth of field effects, which takes into account optical properties of the human eye.

Thus, there exists a need for a graphics system and method capable of generating stereo video which allows users to more easily perceive virtual objects (or portions of objects) in front of and behind the screen surface.

## SUMMARY OF THE INVENTION

Aspects of the invention are defined in the accompanying claims.

A graphics system may, in some embodiments, comprise a rendering engine, a sample buffer and a filtering engine. The rendering engine may receive a stream of graphics primitives, render the primitives in terms of samples, and store the samples into the sample buffer. Filtering engine may read the samples from the sample buffer, generate video output pixels from the samples, and transmit the video output pixels to a display device. The display device presents the video output to a viewer on a two-dimensional screen surface.

In one set of embodiments, the rendering engine and the filtering engine may be configured to generate a stereo video signal whose frames alternate between frames intended for the right eye and frames intended for the left eye of the viewer. The viewer may wear special glasses (e.g. shutter glasses) synchronized with the stereo video signal so the right frames are gated to the right eye and the left frames are gated to the left eye during corresponding time intervals. The graphics primitives may represent a collection of objects in a world coordinate system. Rendering engine may alternately generate frames of samples from the perspectives of a first virtual camera and a second virtual camera. In one embodiment, the position and orientation of the virtual cameras are responsive to the viewer's head and/or eye motions. In another set of embodiments, the rendering engine and filtering engine may be configured to generate a stereoscopic effect with two separate video signals targeted for two display devices respectively. Each of the display devices may be dedicated to a corresponding one of the viewer's eyes. The first video signal may be generated from the perspective of the first virtual camera and the second video signal may be generated from the perspective of the second virtual camera.

The rendering engine may send primitives through a computational pipeline (or partition the primitives among a number of parallel pipelines) to render the primitives in terms of samples. At some stage in the pipeline, a blur value may be assigned to each sample based on a function of the sample's z depth. The blur value determines how much blurring the sample is to experience in the filtration from samples to pixels applied by the filtering engine. A small blur value implies the sample gets filtered with a highly reconstructive filter, i.e. a filter whose spatial cutoff frequency is close to the anti-aliasing cutoff frequency corresponding to one cycle per two video output pixels. A large blur value implies the sample gets filtered with a filter whose spatial cutoff frequency is significantly less than the anti-aliasing cutoff frequency. In general, the spatial cutoff frequency of the filter used to operate on a sample decreases with increasing blur value.

The blur function may be configured with single valley to create a depth-of field effect. For example, the blur function

$$B(z) = \frac{(z-C)^2}{(z-C)^2 + 1}$$

has a minimum at depth C. Thus, samples in the neighborhood of depth C will translate into pixels with minimal blur (i.e. high clarity), and samples far removed from depth C will translate into pixels with a large amount of blur. More generally, the amount of applied blur a sample experiences will depend on its depth displacement (z-C). Thus, virtual objects (or portions of virtual objects) will be blurred in the displayed video output dependent on their positions with respect to the depth C. It is noted that a wide variety of functional forms are contemplated for the blur function. The example above is given for the sake of discussion and is not intended to be limiting.

The rendering engine may be configured to receive sensor measurements which indicate (a) the distance of the intersection point of the viewer's ocular rays with respect to the viewer's eyes, and (b) the distance of the viewer's eyes relative to the screen. The first distance is referred to herein as the eye-relative concentration depth. The second distance may be referred to herein as the screen-relative eye depth. The eye-relative concentration depth may be derived from measurements obtained by a pair of eye trackers fixed relative to the user's head. For example, the eye trackers may be packaged as a single unit with the shutter glasses. The screen-relative eye depth may be measured by a head tracker. The eye-relative concentration depth and the screen relative eye depth may be used to compute a screen-relative concentration depth.

The rendering engine may be configured to dynamically update the blur function in response to motion of the viewer's head and/or eyes. For example, in one embodiment, the rendering engine may track the instantaneous screen-relative concentration depth C(t) for the ocular intersection point based on the sensor measurements, and may dynamically adjust the blur function so its minimum is maintained at (or near) the instantaneous concentration depth C(t). Thus, virtual objects (or portions of virtual objects) that happen to reside in the depth neighborhood of concentration depth C(t) may appear relatively clear. More generally, virtual objects (or portions of virtual objects) may be blurred based on the extent of their depth displacement from C(t). The acquisition of sensor measurements and the computation of concentration depth C(t) may be performed at a sufficiently high rate so that the viewer does not perceive time-discontinuities in the depth-dependent blur. Furthermore, the concentration depth values $C(t_k)$ computed in response to sensor measurements at times $t_k$ may be smoothed (or interpolated) before being applied to the blur function update.

Thus, a viewer who is attempting to redirect his/her gaze at a first virtual object (say at the screen surface) to a second virtual object in front of the screen will notice the first virtual object getting more blurry and the second virtual object getting less blurry (more defined) as he/she converges the ocular rays closer to the second virtual object. This is the type of feedback that the viewer's brain is accustomed to receiving when viewing real objects in the real world. Thus, the probability of successful convergence on (and perception of) the second virtual object is increased.

In various embodiments described herein, the graphics system is said to dynamically update a blur function based on an "instantaneous" viewer concentration depth. The term "instantaneous" is used with the understanding there may be time delays between (a) the time sensor measurements are acquired, (b) the time a viewer concentration depth based on those sensor measurements is available to update the blur function, (c) the time when the blur function update has been completed, (d) the time when the updated blur function has been applied to a frame of rendered samples, (e) the time when the frame of rendered samples has been translated into output pixels by the action of the filtering engine, and (f) the time when the output pixels are presented to the viewer through one or more display devices. As used herein, the term "instantaneous" implies that these time delays are small enough so that the viewer is given the illusion of instantaneous tracking, i.e. the viewer does not perceive any significant adverse visual effects due to the time-delays.

In another set of embodiments, a graphics system may configured with a rendering engine, sample buffer and a filtering engine. The rendering engine may be configured to generate depth values and sample color vectors for a plurality of sample positions in a two-dimensional field, and assign chromatic distortion values to the sample positions based on data including the depth values and a concentration depth of a viewer. The sample color vectors may include a first color component (e.g. red) and second color component (e.g. green) for each sample position. The sample buffer may be configured to store the chromatic distortion values and the sample color vectors for the sample positions. The filtering engine may be configured to:

> read the chromatic distortion values and the sample color vectors for the sample positions from the sample buffer;
> compute a first pixel color for an output pixel by filtering the first color components of the sample color vectors in a first neighborhood of a first position in the two-dimensional field; and
> compute a second pixel color for the output pixel by filtering the second color components of the sample color vectors in a second neighborhood of a second position in the two-dimensional field.

The distance of separation between the first position and the second position may be controlled by the chromatic distortion value.

## BRIEF DESCRIPTION OF THE DRAWINGS

The foregoing, as well as other objects, features, and advantages of this invention may be more completely understood by reference to the following detailed description when read together with the accompanying drawings in which:

Figure 1A illustrates the left and right eye of an observer gazing at a point P in space;

Figure 1B highlights the distances between the observers eyes and the intersection point P;

Figure 2A illustrates a scenario where a viewer is crossing his eyes so as to intersect at a point P in front of a display screen SCR;

Figure 2B illustrates a scenario where a viewer is crossing his eyes so as to intersect at a point P behind a display screen SCR;

Figure 3 illustrates one embodiment of graphics system configured to compute video output pixels by filtration of samples (e.g. supersamples);

Figure 4 defines a screen-relative concentration depth and a head-relative concentration depth which are relevant to the discussion of various embodiments disclosed herein;

Figure 5 illustrates a render scale transformation which transforms a post-clipping viewport onto a render pixel array in a virtual screen space according to one embodiment;

Figure 6 illustrates one embodiment of a graphics pipeline for rendering samples in response to received graphics primitives;

Figure 7 illustrates an array of render pixels and a candidate subset of render pixels which geometrically intersect with a given primitive;

Figure 8 illustrates the candidate render pixels populated with sample positions (e.g. stochastically distributed sample positions) and sample positions interior to the primitive denoted as black dots;

Figure 9A illustrates a blur function which attains a minimum at the screen-relative concentration depth of the viewer;

Figure 9B illustrates a second blur function which attains zero blur beyond a certain distance from the viewer;

Figure 10 is a flow diagram describing one embodiment of step 216 of Figure 6, i.e. one embodiment of a method by which sample values may be assigned to interior sample positions of candidate render pixels;

Figure 11 suggests a linear spatial interpolation of a red intensity value for sample position interior to a triangle in the virtual screen space based on the red sample intensities at the vertices of a triangle;

Figure 12A illustrates the virtual screen space populated with samples organized as an array of render pixels, and an array of virtual pixel centers (i.e. loci for computation of video output pixels) superimposed on the render pixel array according to one set of embodiments; and

Figure 12B illustrates the computation of a single video output pixel based on a filter with circular support according to one set of embodiments.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents, and alternatives falling within the spirit and scope of the present invention as defined by the appended claims. Note, the headings are for organizational purposes only and are not meant to be used to limit or interpret the description or claims. Furthermore, note that the word "may" is used throughout this application in a permissive sense (i.e., having the potential to, being able to), not a mandatory sense (i.e., must)." The term "include", and derivations thereof, mean "including, but not limited to". The term "connected" means "directly or indirectly connected", and the term "coupled" means "directly or indirectly connected".

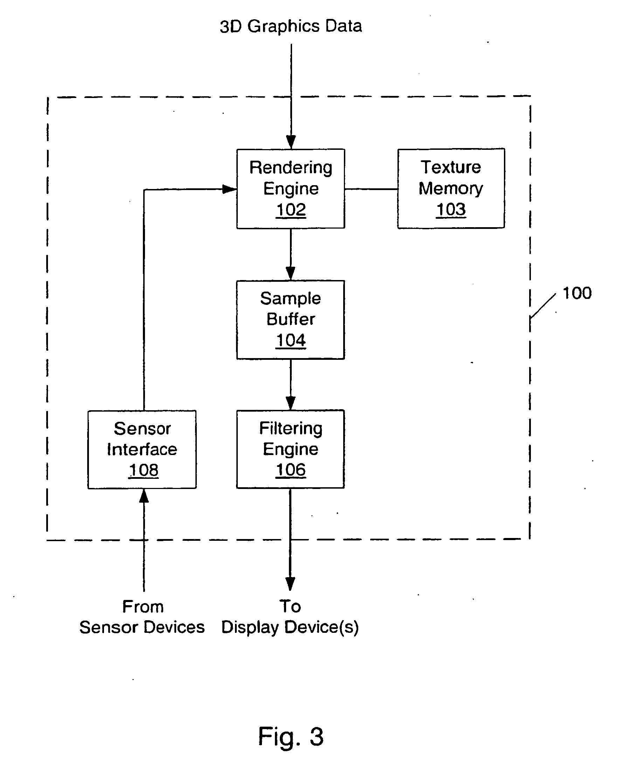

Figure 3 - graphics system 100

Figure 3 illustrates one embodiment of a graphics system 100 configured to generate video signals in response to an input stream of 3D graphics data. Graphics system 100 may receive the 3D graphics data from a graphics API (i.e. an application programmer's interface such as OpenGL®, Java 3D™, PHIGS or Renderman®) running on a host computer system. For example, the graphics API may store the 3D graphics data in a system memory, and graphics system 100 may read the graphics data from the system memory. The graphics API may be controlled by a graphics application (e.g. a video game, flight simulator, a CAD application or a virtual reality application) also running on the host computer system.

The 3D graphics data may comprise a stream of graphics primitives. Examples of graphics primitives include polygons, parametric surfaces, splines, non-uniform rational B-splines (NURBS), sub-division surfaces, fractals, volume primitives, and particle systems. These graphics primitives are described in detail in the textbook entitled "Computer Graphics: Principles and Practice" by James D. Foley, et al., published by Addison-Wesley Publishing Co., Inc., 1996.

Graphics system 100 comprises a rendering engine 102, texture memory 103, sample buffer 104 and filtering engine 106. Rendering engine 102 operates on the graphics primitives to generate samples, and stores the samples in sample buffer 104. Filtering engine 106 reads samples from sample buffer 104 and filters the samples to generate a stereo video signal. The stereo video signal may be transmitted to a display device such as a monitor or projector. The display device presents the frames of stereo video on a display surface. Frames intended for the right and left eyes of a viewer may be displayed alternately. The viewer may wear shutter glasses to enable perception of three-dimensional virtual objects.

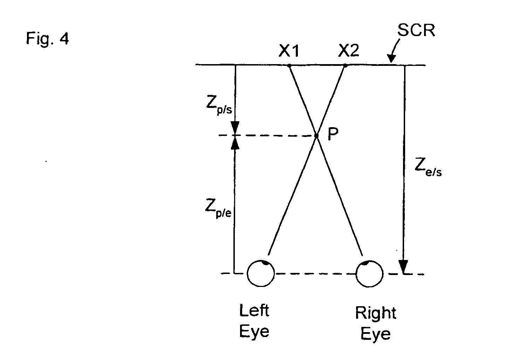

The viewer may freely move his/her eyes to observe various virtual objects in the three-dimensional space. The intersection point P of the viewer's ocular rays has a depth $Z_{p/s}$ with respect to the screen SCR as suggested by Figure 4. This screen-relative concentration depth $Z_{p/s}$ may be determined based on (1) the depth $Z_{p/c}$ of the intersection point P with respect to the viewer's eyes and (2) the depth $Z_{e/s}$ of the viewer's eyes with respect to the screen.

The eye-relative concentration depth $Z_{p/e}$ may be determined by measurements obtained by a pair of eye trackers attached to the viewer's head (e.g. embedded in the shutter glasses). For example, an eye tracker may be configured to measure the horizontal displacement of a single eye by illuminating the eye with an infrared beam, and measuring the amount of light reflected from the eye's surface in one or more directions. Because the white of the eye reflects more than the pupil or iris, the reflected infrared (IR) energy provides a measure of the horizontal displacement of the pupil with respect to a center position. Two such eye trackers, one for each eye, may be used to measure the horizontal displacements of the right and left eyes, and these horizontal displacements may be used to compute (or lookup) the eye-relative concentration depth $Z_{p/c}$. The screen-relative depth $Z_{c/s}$ of the viewer's eyes may be determined from measurements obtained by a head tracking device.

Graphics system 100 may include a sensor interface 108 for coupling to sensor devices, e.g. the eye trackers and/or the head tracker. Sensor interface 108 may receive sensor measurements from the sensor devices, and may provide the sensor measurements to rendering engine 102. Rendering engine 102 may estimate the screen-relative concentration depth $Z_{p/s}$ in response to the sensor measurements. Alternatively, sensor interface 108 may estimate the screen-relative concentration depth $Z_{p/s}$ in response to the measurements, and pass this concentration depth to rendering engine 102. Note, in other embodiments, the sensors may be coupled to the host computer system through an interface (e.g. a data acquisition board) separate from graphics system 100. Thus, the graphics system may receive the sensor data from the system memory of the host computer system.

Rendering engine 102 may organize its generation of samples based on an array of render pixels. The render pixel array may have dimension $M_r \times N_r$, i.e. may comprise $M_r$ render pixels horizontally and $N_r$ render pixels vertically. Rendering engine 102 may be configured to generate a programmable number $N_{s/rp}$ of sample positions per render pixel. If a render pixel is found to intersect with a given primitive (e.g. polygon), rendering engine 102 may (a) generate $N_{s/rp}$ sample positions in the render pixel, (b) determine which of the sample positions fall inside the primitive, and (c) compute color information for the interior sample positions based on a spatial interpolation of the color values at the vertices of the primitive. In addition, if the primitive is to be textured, one or more texture values may be determined for the intersecting render pixel, and the one or more texture values may be used in step (c) to determine the interior sample colors. In some embodiments, render array size parameters $M_r$ and $N_r$ and sample density parameter $N_{s/rp}$ may be changed on a per-frame basis. Furthermore, the size parameters $M_r$ and $N_r$ and the sample density parameter $N_{s/rp}$ may be varied independently. Step (c) is referred to herein as the "sample fill" process. Rendering engine 102 may perform some or all of the sample-fill processing using dedicated circuitry.

Sample buffer 104 may be double-buffered, i.e. may include two buffer segments. Thus, rendering engine 102 may write into one buffer segment, while filtering engine 106 reads from the other buffer segment.

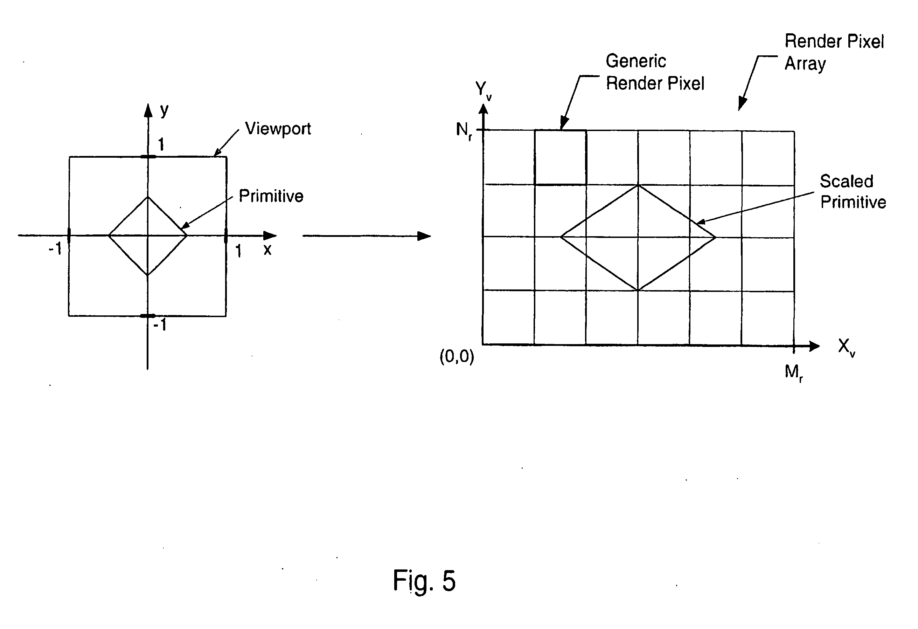

In some embodiments, after clipping and perspective divide, what remains is a viewport with finite extent in the horizontal and vertical directions, e.g., with an extent which ranges from -1 to 1 in the horizontal coordinate x and from -1 to 1 in the vertical coordinate y. Rendering engine 102 may perform a transformation on primitives which maps the viewport onto the render pixel array (i.e. so as to exactly cover the render pixel array) as suggested in Figure 5. For example, the viewport to render array mapping may be described by the following expression.

$$(x, y) \rightarrow \left( \frac{M_r}{2} x + \frac{M_r}{2} , \ \frac{N_r}{2} y + \frac{N_r}{2} \right).$$

Because the viewport maps onto the render pixel array, smaller values for the render array sizes $M_r$ and $N_r$

imply that each primitive (e.g. triangle) intersects fewer render pixels. Fewer intersecting render pixels implies fewer texture memory accesses, and also less computational burden on the sample-fill process if the sample density $N_{s/rp}$ remains constant. Thus, rendering engine 102 may more quickly complete rendering of the primitives for the current frame using the smaller render pixel array.

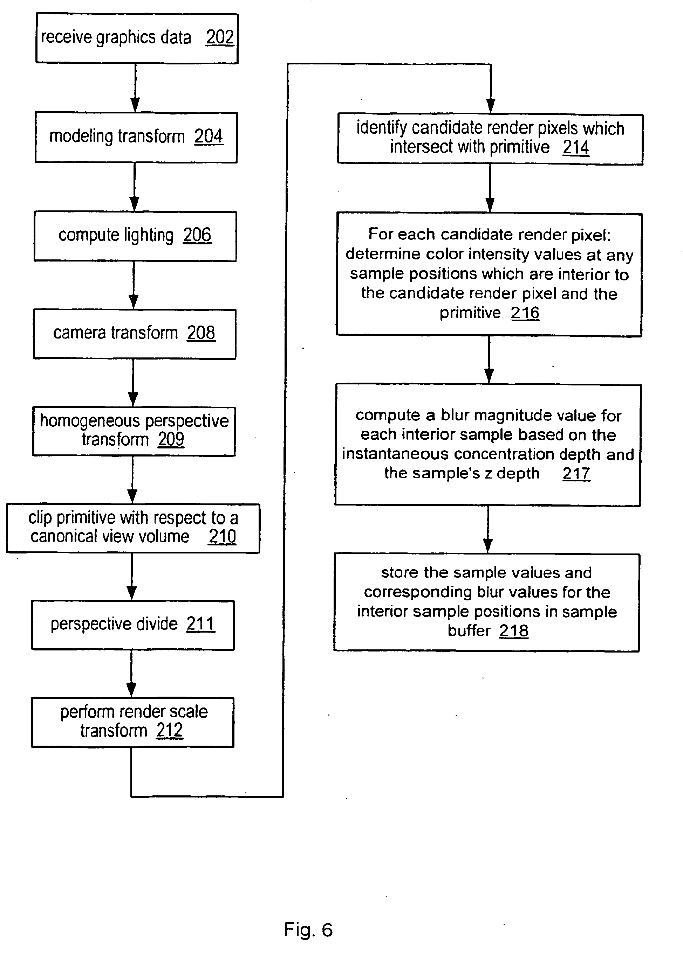

Figure 6 illustrates one embodiment of a computational pipeline implemented by rendering engine 102. In step 202, rendering engine 202 receives a stream of graphics data from an input port, and stores the graphics data in an input buffer. The graphics data includes a stream of graphics primitives.

In step 204, rendering engine 102 may access a primitive (e.g. a polygon) from the input buffer, and perform a modeling transformation on the primitive. The modeling transformation injects the primitive into a world coordinate system, and may be the composition of a series of transformations. For example, a primitive on the hand of a virtual human may be operated on by a modeling transformation which is the composite of (a) a first transformation designating the orientation of hand with respect to a forearm, (b) a second transformation designating the orientation of forearm with respect to upper arm, (c) a third transformation designating the orientation of upper arm with respect to torso, a fourth transformation designating the position and orientation of the torso with respect to the world coordinate system. Thus, the modeling transformation may require updating whenever any component in its composition chain changes. The modeling transformation may also include the transformation of any normal vectors associated with the primitive.

In step 206, rendering engine 102 may subject the primitive to a lighting computation. Lighting intensity values (e.g. color intensity values) may be computed for the vertices of polygonal primitives based on:

    (1) the vertex normals;
    (2) the position and orientation of a virtual camera in the world coordinate system;
    (3) the intensity, position, orientation and type-classification of light sources; and
    (4) the material properties of the primitives such as their intrinsic color values, ambient, diffuse and/or specular reflection coefficients.

The vertex normals (or change in normal from one vertex to the next) may be provided as part of the graphics data stream, or may be computed from polygon normals. Polygon normals in turn may be computed from the vertices (e.g. based on a cross product). Rendering engine 102 may implement any of a wide variety of lighting models. It is noted that separate virtual camera positions may be maintained for the viewer's left and right eyes. Rendering engine 102 may alternate between the left camera position and the right camera position from frame to frame.

In step 208, rendering engine 102 may perform a camera transformation on the vertices of the primitive. The camera transformation may be interpreted as giving the coordinates of the primitive vertices with respect to a camera coordinate system which is rigidly bound to a virtual camera in the virtual world space. Thus, the camera transformation may require updating whenever the camera position and/or orientation changes. The virtual camera position and/or orientation may be controlled by user actions such as manipulations of a joystick. In some embodiments, the virtual camera orientation may be controlled by measurements of a user's head position and/or eye orientation(s).

In step 209, rendering engine 102 may perform a homogenous perspective transformation to map primitives from the camera coordinate system into a clipping space. The homogeneous perspective transformation may map a 3D view volume (defined by the virtual camera position and view window in virtual world space) to a canonical view volume which is more convenient for the clipping computation.

In step 210, rendering engine 102 may perform a clipping computation on the primitive. In clipping space, the vertices of primitives may be represented as 4-tuples (X,Y,Z,W), and the clipping may be implemented by performing a series of inequality tests as follows:

    $T1 = (-W \leq X)$
    $T2 = (X \leq W)$
    $T3 = (-W \leq Y)$
    $T4 = (Y \leq W)$
    $T5 = (-W \leq Z)$
    $T6 = (Z \leq 0)$

If all the test flags are all true, a vertex resides inside the canonical view volume. If any of the test flags are false, the vertex is outside the canonical view volume. An edge between vertices A and B is inside the canonical view volume if both vertices are. An edge can be trivially rejected if the expression Tk(A) OR Tk(B) is false for any k in the range from one to six. Otherwise, the edge requires testing to determine if it partially intersects the canonical view volume, and if so, to determine the points of intersection of the edge with clipping planes. A primitive may thus be cut down to one or more interior sub-primitives. Thus, rendering engine 102 may compute color intensity values for the new vertices generated by clipping.

In step 211, rendering engine 102 may perform a perspective divide on the homogenous post-clipping vertices (X,Y,Z,W) according to the relations

$x=X/W$

$y=Y/W$

$z=Z/W$.

After the perspective divide, the primitives reside in a viewport square defined by the inequalities $-1 \leq x \leq 1$ and $-1 \leq y \leq 1$.

In step 212, rendering engine 102 may perform the render scale transformation on the post-clipping primitives as suggested by Figure 5. The render scale transformation may map the viewport square in perspective-divided space onto the render pixel array in virtual screen space, i.e. onto a rectangle whose width equals the array horizontal resolution $M_r$ and whose height equals the array vertical resolution $N_r$. Let $X_v$ and $Y_v$ denote respectively the horizontal and vertical coordinate in the virtual screen space. It is noted that rendering engine 102 may be configured to map the viewport square onto a rectangular region which does not completely cover the render pixel array. The position and dimensions of the rectangular window may be defined by user input.

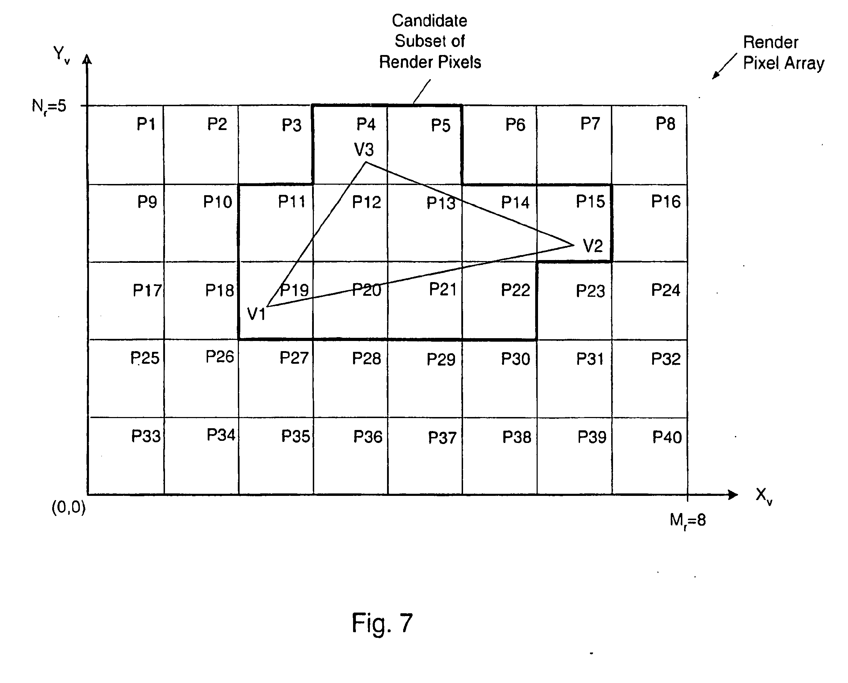

In step 214, rendering engine 102 may identify a subset of render pixels which geometrically intersect with the post-scaling primitive as suggested by Figure 7. Render pixels in this subset are referred to as "candidate" render pixels or "intersecting" render pixels. It is noted that values $M_r=8$ and $N_r=5$ for the dimensions of the render pixel array have been chosen for sake of illustration, and are much smaller than would typically be used in most embodiments of graphics system 100.

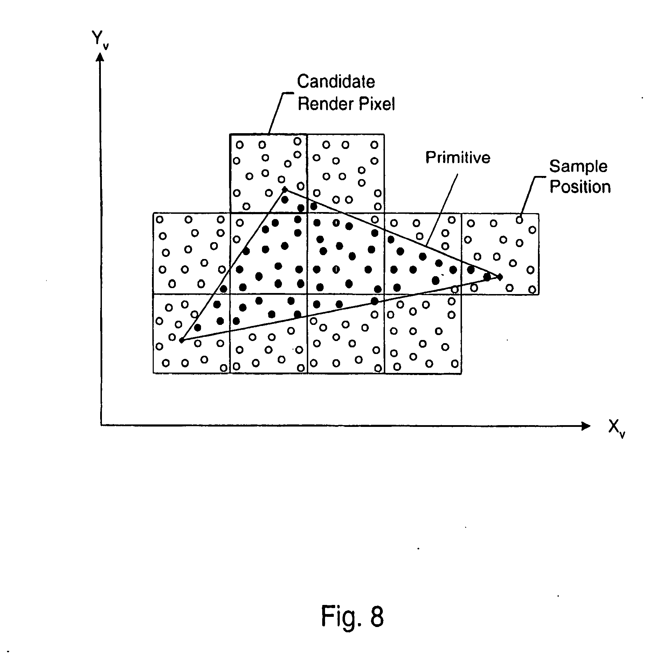

In step 216, rendering engine 102 may operate on each candidate render pixel by computing color intensity values at any sample positions which reside interior to the primitive and the candidate render pixel as suggested by Figure 8. In Figure 8, interior sample positions are denoted as small black dots, and exterior sample positions are denoted as small circles. Step 216 is described more elaborately below.

In step 217, rendering engine 102 may compute a blur magnitude for each interior sample of the candidate render pixel based on the z coordinate of the interior sample and the z coordinate of the current intersection point P of the viewer's ocular rays.

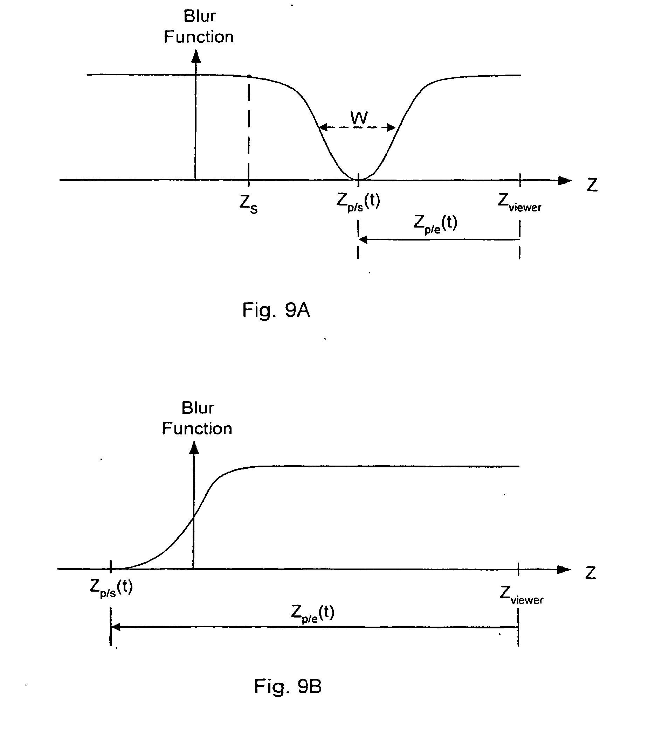

For convenience of discussion, assume the z coordinate is defined so that the z=0 plane corresponds to the screen and the positive direction of the z axis is defined so that the viewer resides in the z>0 half space. Rendering engine 102 may compute the blur magnitude for each interior sample S based on an estimate of the current value $Z_{p/s}(t)$ of the screen-relative concentration depth $Z_{p/s}$ (see Figure 4) and the z coordinate $z_S$ of the interior sample. In particular, rendering engine 102 may assign the blur magnitude of each interior sample based on a blur function as suggested by Figure 9A. The blur function attains a minimum value of zero at the current concentration depth $Z_{p/s}(t)$. Thus, the blur magnitude may vary continuously as a function of sample depth $z_S$. For example, samples having depths $z_S$ in the neighborhood of the current concentration depth may be assigned small blur magnitude values, and samples having depths $z_S$ far removed from the current concentration depth may be assigned large blur magnitudes. The blur magnitude of each sample controls how much "blurring" the sample is to experience in the filtration from samples to pixels applied by filtering engine 106.

Filtering engine 106 generates each video output pixel by filtering a neighborhood of samples. In one set of embodiments, each sample in the neighborhood is assigned a filter coefficient based on a filter which induces blurring to an extent determined by the sample's blur magnitude value. A blur magnitude value of zero corresponds to a highly reconstructive filter which retains spatial frequencies up to the anti-aliasing cutoff frequency f, corresponding to one cycle per two pixels. A maximal blur magnitude value corresponds to a highly blurring filter which retains spatial frequencies up to a cutoff frequency which is significantly smaller than the anti-aliasing cutoff frequency $f_r$. Filtering engine 106 computes a weighted average of sample color values using the filter coefficients to determine the corresponding pixel color values. Thus, a neighborhood of screen pixels generated from samples having large blur magnitudes will present the image information implicit in the samples with a significant amount of blur. Conversely, a neighborhood of pixels generated from samples having small blur magnitudes will present the image information implicit in the sample relatively clearly.

The blur function may be dynamically updated so that as the viewer moves his/her eyes the absolute minimum of the blur function is maintained at (or near) the instantaneous screen-relative concentration depth $Z_{p/s}(t)$. Thus, virtual objects (or portions of virtual objects) in the depth neighborhood of the instantaneous concentration depth $Z_{p/s}(t)$ may be rendered more clearly on screen SCR than virtual objects (or portions of virtual objects) closer or farther than this depth neighborhood. In one set of embodiments, the blur function may be updated on a frame by frame basis, or once every N frames where N is an integer greater than one. In another set of embodiments, the rate of blur function update may be non-uniform and may depend on the rate of change of the concentration depth, i.e. higher rates of depth change being connected with higher rates of blur function updating.

The rate at which sensor measurements (e.g. eye tracker and head tracker measurements) are acquired at least partially determines the quality of tracking of the screen-relative concentration depth $Z_{p/s}(t)$. It is typically desirable to have a sensor measurement rate which is high enough so the viewer does not perceive time-discontinuities in the depth-dependent blurring generated by graphics system 100. In some embodiments, sensor measurements may be obtained at a first rate, while graphics system 100 estimates values for the screen-relative concentration depth at another higher rate by interpolation.

As suggested by Figure 9A, the blur function may have a valley centered at (or near) the instantaneous screen-relative concentration depth $Z_{p/s}(t)$. Let W denote the width of the valley. In one set of embodiments, the width W may vary as a function of the instantaneous eye-relative concentration depth $Z_{p/c}(t)$. For example, the width W may be an increasing function of the eye-relative concentration depth. Thus, W may attain small values when the viewer is concentrating on objects close to his/her head, and may attain larger values when the viewer is concentrating on objects farther from his/her head.

In another set of embodiments, the valley may be asymmetric, i.e. may rise more rapidly on one side than the other. In these embodiments, the valley may be characterized by two widths, one for each side of the valley. In yet another set of embodiments, the family of blur functions may include blur functions as suggested by Figure 9B, where the negative infinity side of the valley is flattened to zero. Thus, virtual objects (or portions of virtual objects) farther from the viewer than the eye-relative concentration depth $Z_{p/c}(t)$ may be rendered more clearly on screen SCR than virtual objects (or portions of virtual objects) closer than this depth.

In some embodiments, the blur function evaluation may be performed by table lookup and interpolation. The blur table may store values of the blur function indexed by the difference value $z_S - Z_{p/s}(t)$, where $z_S$ is the sample's depth coordinate and $Z_{p/s}(t)$ is an estimate of the instantaneous screen-relative concentration depth of the viewer. In one embodiment, the blur function may be effectively stretched or contracted by multiplying the difference value $z_S - Z_{p/s}(t)$ by a width correction factor k before accessing the blur table. Width correction factors k smaller than one (and positive) correspond to stretching. The width correction factor k may itself be determined by table lookup in a width correction table. The width correction table may be accessed based on the instantaneous eye-relative concentration depth $Z_{p/c}(t)$.

In step 218, rendering engine 102 may store the computed color intensity values and blur magnitude values for the interior sample positions in sample buffer 104. In some embodiments, rendering engine 102 may store an encoded version of the blur magnitude instead of the blur magnitude.

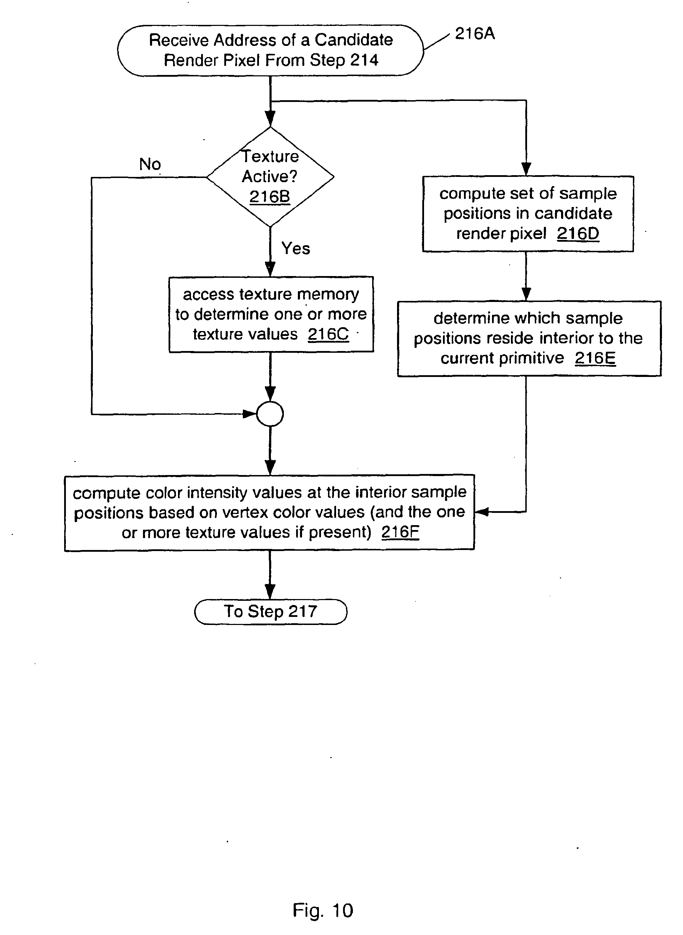

Figure 10 illustrates step 216 in more detail. In step 216A, rendering engine 102 may access an address of a candidate render pixel determined in step 214. In step 216B, rendering engine 102 may determine if a texture state indicator is true. If the texture state indicator is true, rendering engine 102 may perform step 216C. Otherwise, rendering engine 102 may skip step 216C and jump to step 216F.

In step 216C, rendering engine may access texture memory 103 to determine one or more texture values for the candidate render pixel. Texture memory 103 contains textures which are to be mapped onto objects (or portions of objects). Each texture may comprise an array of texels (i.e. texture elements). A texture may be organized as a MIP (multum in parvo - i.e. many things in a small place) map, where a fundamental texture image is represented at multiple different scales. Because textures are often applied to curved surfaces, the mapping from render pixel coordinates to texture coordinates is generally non-linear, and the centers of candidate render pixels typically do not map onto texel centers.

In step 216D, rendering engine 102 may compute a set of sample positions in the candidate render pixel. The sample positions may be generated according to a regular or pseudo-random pattern. In one embodiment, graphics system 100 includes a sample position memory which stores a list of horizontal and vertical sample positions offsets. The horizontal and vertical sample position offsets may be added to the origin of the candidate render pixel to generate the sample positions. The sample density parameter $N_{s/rp}$ determines the number of sample positions to be generated per candidate render pixel. The sample density parameter $N_{s/rp}$ may vary from one up to maximum value. In one embodiment the maximum value is sixteen. However, the maximum sample density may attain larger values at the expense of more sample processing hardware and/or more sample buffer memory.

In step 216E, rendering engine 102 may determine which of the sample positions in the candidate render pixel fall inside the current primitive. These sample positions falling inside the primitive will be referred to herein as "interior" sample positions.

It is noted that steps 216B and 216C may be performed in parallel with steps 216D and 216E.

In step 216F, rendering engine 102 may compute color intensity values for the interior sample positions of the candidate render pixel based on the vertex color values and also on the one or more texture values if texture processing step 216C was performed. Step 216F is referred to herein as the "sample-fill" computation. The present invention contemplates a wide variety of ways for performing the "sample-fill" computation. In one embodiment, the sample-fill computation may be programmable. Thus, a system designer/programmer may specify any desired functional combination of the vertex coordinates, vertex color intensity values, and one or more texture values to determine the sample color intensity values.

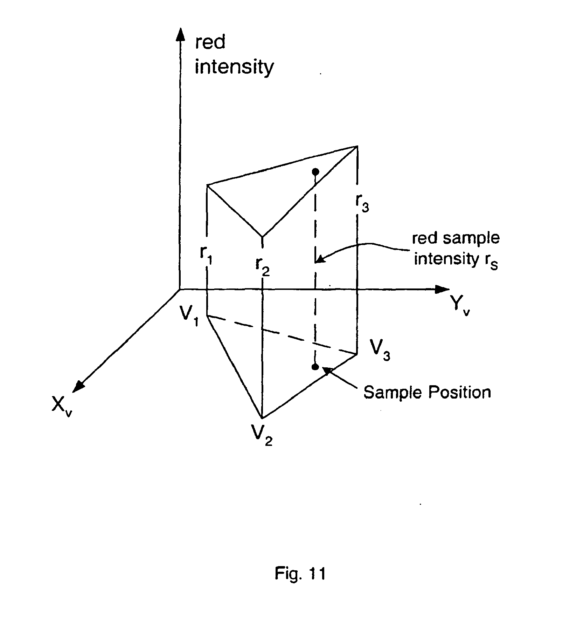

In a second embodiment, rendering engine 102 may compute initial color values for the interior sample positions of the candidate render pixel based on a spatial interpolation of vertex color values as suggested by Figure 11. Figure 11 illustrates a linear interpolation of a red intensity value $r_S$ for a sample position inside the triangle defined by the vertices V 1, V2 and V3 in virtual screen space (i.e. the horizontal plane of the figure). The red color intensity is shown as the up-down coordinate. Each vertex Vk has a corresponding red intensity value $r_k$. (The vertex color values are computed in the lighting computation 206). In this embodiment, three texture values may be determined (in step 216C) for the candidate render pixel, i.e. one for each color component. These texture colors may multiply the corresponding sample initial color values. In other words, textured color values for each interior sample of the candidate render pixel may be computed according to the relations

$Tred_s$ = (red texture value)($r_s$),

$Tgreen_s$ = (green texture value)($g_s$),

$Tblue_s$ = (blue texture value)($b_s$),

where ($r_s$,$b_s$,$g_s$) is the initial color intensity vector computed by spatial interpolation for the sample S. The textured sample color values may be further subjected to depth-cueing, fogging and/or the addition of a separately interpolated specular color.

For specificity in the discussion of step 217 above, the z coordinate was assumed to have its origin at the screen SCR. More generally, the z coordinate may be defined in various ways depending on the dictates of the user, the structure of the rendering pipeline implemented in rendering engine 102, the type of graphics data to be handled by the graphics system, the type of software application to be run on the host computer, etc. The magnitudes of the blur values assigned to samples depends on their z distances from the current intersection point P of the viewer's ocular rays.

In some applications, e.g. in 3D virtual reality applications, the z coordinate may have its origin at the eye of the user. Thus, in these applications, the eye-relative concentration depth $Z_{p/c}$ may the significant parameter to compute and track rather than the screen-relative concentration depth $Z_{p/s}$. The blur function may be updated so that its minimum occurs at the instantaneous eye-relative concentration depth $Z_{p/c}(t)$. The rendering engine 102 may compute differences between the z coordinates of samples and the instantaneous eye-relative concentration depth $Z_{p/c}(t)$, and use the differences to access a blur function table for the blur values.

For information on generating complex 3D stereo images in response to real time viewer head movements, please refer to U.S. Patent No. 5,287,437, issued on February 15, 1994, entitled "Method and apparatus fur head tracked display of precomputed stereo images" which is hereby incorporated by reference it is entirety.

For information on a head tracked stereo display system for generating virtual images over a wide range of viewer head movement, and for intermixing light from virtual objects and real objects in a natural arrangement, please refer to U.S. Patent No. 5,394,202 issued on February 28, 1995, entitled "Method and apparatus for generating high resolution 3D images in a head tracked stereo display system" which is hereby incorporated by reference in it entirety.

Filtration of Samples to Determine Pixels

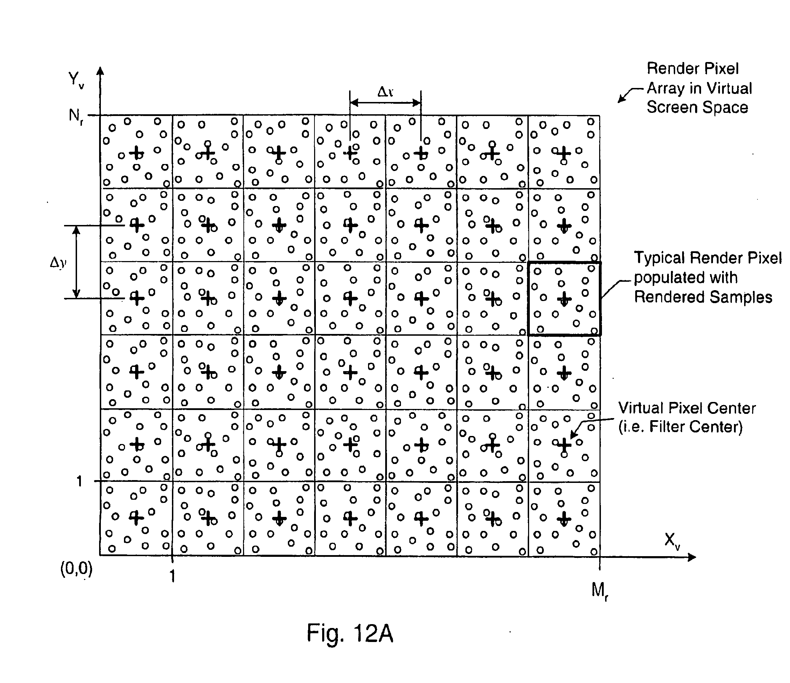

When rendering engine 102 has completed the rendering of a frame into one of the buffer segments of sample buffer 104, filtering engine 106 may access the samples contained in the buffer segment and generate video output pixels from these samples. Each buffer segment of sample buffer 104 stores an M,xN, array of render pixels. Each render pixel stores $N_{s/rp}$ samples. Recall that $M_r$, N, and $N_{s/rp}$ are programmable parameters. Thus, the set of addresses represented by the render pixel array in the buffer segments may change from frame to frame. As suggested by Figure 12A, filtering engine 106 may scan through virtual screen space in raster fashion (or a distorted raster fashion in order to compensate for display/projector distortions) generating virtual pixel positions denoted by the small cross markers, and generating a video output pixel at each of the virtual pixel positions based on the samples (small circles) in the neighborhood of the virtual pixel position. The virtual pixel positions are also referred to herein as filter centers since the video output pixels are computed by means of a filtering of samples. The virtual pixel positions form an array with horizontal displacement $\Delta X$ between successive virtual pixel positions in a row and vertical displacement $\Delta Y$ between successive rows. The first virtual pixel position in the first row is controlled by a start position ($X_{start}$,$Y_{start}$). The horizontal displacement $\Delta X$ and vertical displacement $\Delta Y$ and the start coordinates $X_{start}$ and $Y_{start}$ are programmable parameters. Figure 12A illustrates a virtual pixel position at the center of each render pixel. This implies that the horizontal and vertical displacements of the virtual pixel array equal one, and the start position equals (1/2,1/2). However, this arrangement of the virtual pixel positions (at the centers of render pixels) is a special case. More generally, the horizontal displacement $\Delta x$ and vertical displacement $\Delta y$ may be assigned values greater than or less than one.

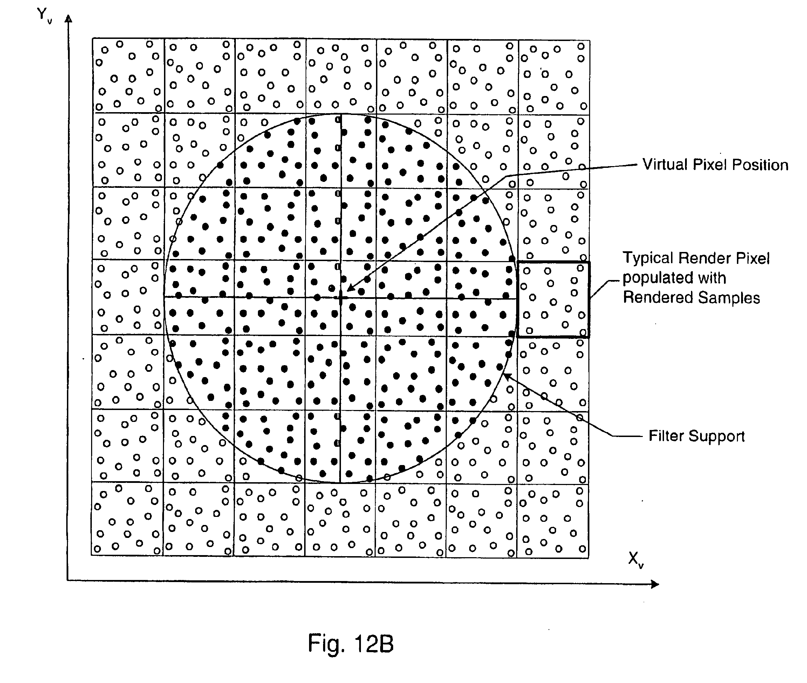

Filtering engine 106 may compute a video output pixel at a particular virtual pixel position as suggested by Figure 12B. Filtering engine 106 computes the video output pixel based on a filtration of the samples falling within a filter support region centered on the virtual pixel position. Each sample S falling within the filter support may be assigned a filter coefficient $C_S$ based on (a) the sample's position with respect to the virtual pixel position, and (b) the sample's blur magnitude value (or blur code value).

In one set of embodiments, the sample's blur magnitude $B_S$ may specify the spatial cutoff frequency of the filter function used to determine the sample's filter coefficient $C_S$. The spatial cutoff frequency of the filter function may be a decreasing function of blur magnitude. A blur magnitude of zero may specify a highly reconstructive filter which passes spatial frequencies up to the anti-aliasing cutoff frequency (i.e. one cycle per two video output pixels). For example, a windowed sinc filter (or Catmull-Rom filter) with central lobe width equal to two pixels may serve as the highly reconstructive filter corresponding to zero blur magnitude. A maximal blur magnitude may specify a filter which passes spatial frequencies up to a significantly smaller cutoff frequency. For example, a cylinder filter or Gaussian filter may serve as the maximal blur filter. Thus, the sample's blur magnitude selects a filter function out of a family of filter functions parameterized by blur magnitude.

It is noted that the filtering hardware in filtering engine 106 may be configured to load sample data from sample buffer 104 into a local memory, and perform the filtering computations for a pixel based on the sample data stored in the local memory. The storage of samples in the sample buffer 104 and in the local memory may be organized according to render pixels. The capacity of the local memory may set a maximum on the number of render pixels can contribute samples to the pixel computation. For example, the local memory may have sufficient capacity to store a 5x5 neighborhood of render pixels. Thus, any filter function applied to the samples has an effective maximum domain that fits within the 5x5 neighborhood. As noted above, the blur magnitude of a sample may control the choice of a filter (to be applied to the sample) from an ensemble of filters. The ensemble of filters varies from reconstructive (i.e. with maximal cutoff frequency) to significantly blurring depending on the blur magnitude. One mechanism for generating such an ensemble uses with a base filter $F_B(r)$ and expanded versions thereof. The base filter $F_B$ may be configured to approximate the ideal sinc filter which retains frequencies up to the cutoff frequency of one cycle per two video output pixels. The base filter may be expanded in the radial direction by scaling the radius r of samples before evaluating the base filter. An expanded filter $F_k(r)$ may be defined by $F_k(r)=F_B(r/k)$ where k>1 is the expansion factor. Of course, the portion of the expanded filter $F_k(r)$ which fits within the 5x5 neighborhood will appear less and less like a sinc function as k increases. As k increases, the central lobe expands to consume to the whole 5x5 neighborhood. As k increases further, the retained portion begins to appear like a box filter. This departure of the restricted filters from the form of an ideal sinc is acceptable because the expanded filters are desired not for the sharpness of their cutoff but for their capacity to generate successively increasing amounts of blur as k increases.

Given sample S interior to the filter support and the filter function $F_B$ defined by the sample's blur magnitude, the sample's filter coefficient $C_S$ may be determined by evaluation of the filter function $F_B$. The filter function $F_B$ may be a function of some measure of the sample's distance from the filter center (i.e. the virtual pixel position). For example, the distance measure may be the sample's radius, square radius, L, norm, or $L^{infinity}$ norm with respect to the filter center. Filtering engine 106 may compute the sample's distance measure and evaluate the filter function $F_B$ at this distance measure to determine the sample's filter coefficient $C_S$.

It is noted that the filter functions in the parameterized family may not all have the same net volume. For example, in some embodiments, the filter functions in the parameterized family may be generated by radially expanding the zero-blur reconstruction filter $F_0(r)$ by varying amounts. The amount of induced blurring depends on the radial expansion factor, i.e. larger expansions give increased blur. However, when a function of radius is expanded radially by a factor of k, the volume of the function increases. Thus, a field of samples having constant color will appear brighter when filtered with expanded function $F_0(r/k)$ than with original function $F_0(r)$. Thus, it may be necessary to multiply the sample's filter coefficient $C_S$ by a scale correction factor $g_S$ to get all the filter functions on an equal volumetric basis:

$$\hat{C}_S = C_S * g_S.$$

The scale correction factor gs may be determined by the sample's blur magnitude.

The color components of the video output pixel may be determined by computing a weighted sum of the corresponding sample color components for samples failing inside the filter support. (The samples falling inside the filter support are denoted in Figure 12B as black dots while the exterior samples are denoted as small circles.) For example, filtering engine 106 may compute a red value $R_P$ for the video output pixel P based on the relation

$$\dot{R}_P = \frac{1}{E} \sum \hat{C}_S R_S,$$

where the summation includes one term for each sample S interior to the filter support, where $R_S$ is the red sample value of the sample S. Similar summations may be used to compute the other color components and perhaps non-color components (such as $\alpha$) of the video output pixel based on the corresponding components of the samples.

The value E is a normalization value that may be computed according to the relation

$$E = \sum \hat{C}_s \,,$$

where the summation includes one term for each sample S falling in the filter support. The summation for the normalization value E may be performed in parallel with the red, green, blue and/or alpha pixel value summations.

In some embodiments, the sample's filter coefficient $C_S$ may be determined by table lookup. For example, in one embodiment, the square radius of a sample with respect to the virtual pixel position is determined by adding the squares of the sample's delta x and delta y with respect to the virtual pixel position. The square radius may be converted into a stubby floating point format. The stubby floating-point square radius and the sample's blur magnitude (or blur code value) may be used to access a filter coefficient table. The filter coefficient table may store tabulated values for each function in the parameterized family of filter functions. It is noted that the filter coefficient table may be indexed by any of various radial distance measures. For example, the sample's radius with respect to the filter center may be used as the indexing parameter at the expense of performing a square root.

In a second embodiment, the filter coefficient table may store tabulated values for a single filter function (e.g. the zero-blur reconstruction filter $F_0$). The sample's radius $r_S$ (or stubby floating-point square radius) may be multiplied by a positive scaling factor $v_S$. The resulting product $r_S v_S$ may be used to access the filter coefficient table. Multiplying the sample radius by scaling factor $v_s$ prior to the table evaluation of function $F_0$ has the effect of radially expanding the function $F_0$ by a factor of $(1/v_S)$. Scaling factors $v_s$ smaller than one (yet still positive) induce proper expansions, and the closer the scaling factor is to zero, the greater the induced expansion. The scaling factor $v_s$ may be determined by the sample's blur magnitude (or blur code value), e.g: by a separate table lookup.

In a third embodiment, the filter coefficient table of the second embodiment above may be replaced by a dedicated function evaluation circuit. The function evaluation circuit may receive an input argument U and evaluate the function $F_0$ on the input argument U. The function evaluation circuit may store parameters (e.g. polynomial coefficients) which characterize the function $F_0$. As above, the input argument may be the scaled radius $r_S v_S$.

Filtering engine 106 may use any of a variety of filters either alone or in combination to compute pixel values from sample values. For example, filtering engine 106 may use the box filter, the tent filter, the cone filter, the cylinder filter, the Gaussian filter, the Catmull-Rom filter, the Mitchell-Netravali filter, the windowed sinc filter, or in general, any form of bandpass filter or any of various approximations to the sinc filter.

Filtering engine 106 may include one or more dedicated chips optimized for performing the filter coefficient lookups, the coefficient-color (or coefficient-alpha) multiplications, the summations of the resultant products and the coefficient values, the reciprocation of the normalization constant E, and multiplication of the various summations by (1/E).

The filter support is illustrated in Figure 12B as a circular disk with diameter equal to 5 render pixels. However, the present invention contemplates a variety of values for the filter support diameter. Larger values for the filter support diameter imply the need for increased silicon area for processing samples in order to maintain a constant pixel output rate.

As mentioned above, in order to generate a frame of video output, filtering engine 106 may scan through the virtual screen space generating an array of virtual pixel positions and computing pixel components (e.g. red, green, blue and alpha) at each of the virtual pixel positions. Let $M_f$ denote the number of virtual pixel positions in the horizontal direction, and $N_f$ denote the number of virtual pixel positions in the vertical direction. The video output for a given frame may be generated by filtering engine 106 according to the following pseudo-code fragment.

```
I=0;
J=0;
Xʳ=X_start;
Yʳ=Y_start;
while (J<N_f) {
while (I < M_f)  {
                    PixelValues = Filter (Xʳ,Yʳ);
    Output PixelValues;
    Xʳ = Xʳ+ ΔX ;
    I = I + 1;
              }
Xʳ=X_start;
Yʳ=Yʳ+ ΔY ;
J=J+1;
}
```

The index I is a horizontal index. The index J is a vertical index. Recall that the point $(X_{start}, Y_{start})$ defines the start position in the virtual screen space for the array of virtual pixel positions. The function Filter(*,*) represents the filtration of samples in the neighborhood of the current virtual pixel position (X',Y') to determine the components (e.g. color) of the current output pixel as described above in connection with Figure 12B. Once computed, the pixel values may be output to a display device (e.g. a projector or monitor). The inner loop generates successive virtual pixel positions within a single row. The outer loop generates successive rows. The above fragment may be executed once per video frame. It is noted that the virtual pixel array parameters $X_{start}$, $Y_{start}$, $\Delta X$, $\Delta Y$, $M_f$ and $N_f$ are programmable and dynamically adjustable. Thus, graphics system 112 may be configured to support arbitrary video formats. Furthermore, the array of virtual pixel positions may be mapped into the virtual screen space with arbitrary position, horizontal scale and vertical scale.

Most of the discussion above has focused on a double-buffered sample buffer. However, in other embodiments, the sample buffer 104 may be triple-buffered, or N-fold buffered wherein N is a positive integer greater than two, at the expense of increased latency. In one alternative embodiment, the sample buffer may be single buffered.

Pupil Diameter

In the real world, the instantaneous depth of field of an eye depends on the pupil diameter. The depth of field decreases as the pupil diameter increases. In one set of embodiments, the graphics system may couple to a sensor (or sensors) which measures the pupil diameter (or pupil area) for one or both eyes of the viewer (or which provides measurements from which pupil diameter may be computed). The pupil diameter(s) may be used to dynamically update the blur valley width W along with the eye-relative concentration depth $Z_{p/c}$. The partial derivative of valley width W with respect to pupil diameter may be negative.

More Generalized Blur Effects

In the embodiments above, the blur magnitude was used to induce blurring of samples for depth-of-field emulation, i.e. to present pixilated virtual objects to the viewer with a depth-dependent blurring that approximates the depth-of-field related blurring of physical objects observed in the real world. However, it is noted that the blur magnitude may be used to induce blurring of samples for any of a variety of reasons. For example, in some embodiments, virtual objects may be blurred by an amount dependent on their speed relative to the virtual camera's field of view. This blur effect is referred to as motion blur. Please refer to
U.S. Patent Application Serial No. 09/571,768, filed on May 16, 2000, entitled "Graphics System Using Sample Tags for Blur", invented by Michael F. Deering, and
U.S. Patent Application Serial No. 09/571,988, filed on May 16, 2000, entitled "Graphics System Using Sample Masks for Motion Blur, Depth of Field, and Transparency", invented by Michael F. Deering and Scott R. Nelson for further description of graphics systems configured to generate motion blur effects. These applications are hereby incorporated by reference in their entirety.

Virtual objects may be blurred by virtue of their own motion (e.g. translation and/or rotation) and/or movement of the virtual camera position and/or orientation. Rendering engine 102 may compute a camera-relative velocity for each primitive. The component of the camera-relative velocity normal to the camera's view axis may be used to determine the blur magnitude for samples interior to the primitive. For example, rendering engine 102 may compute a motion blur value based on the normal velocity component and a depth-dependent blur value (as described above for creating a depth-of-field effect) for each interior sample. The motion blur value and depth-dependent blur value may be combined to determine the final blur magnitude for the interior sample. In one embodiment, the final blur magnitude for a sample is the maximum of the motion blur value and the depth-dependent blur value.

The blurring of image information may be desirable for a variety of reasons. Thus, the blur magnitude may be viewed as a generalized blur channel allowing a variable amount of blur to be applied to individual samples regardless of the reason for which the blur is desired.

Anisotropic Filtering

In one set of embodiments, filtering engine 106 may be configured to operate with filter functions more general than the radially-symmetric filter functions described above. For example, a filter function $f(x,y)=sinc(\pi x)$ with fixed filter support may induce blurring in the y direction and accurate reconstruction in the x direction. A rotation through angle $\theta$ followed by evaluation of the same filter function, i.e.

$$u = x*cos(\theta) + y*sin(\theta)$$

$$v = -x*sin(\theta) + y*cos(\theta)$$

$$f(u,v)=sinc(\pi u)$$

induces accurate reconstruction in the direction corresponding to angle $\theta$ and blurring in the orthogonal direction. The filter function

$$f(x,y)=sinc(k_x\pi x)sinc(k_y\pi y)$$

induces blurring in the x and y directions dependent on the values of scaling factors $k_x$ and $k_y$. More generally, it may be desirable to determine a filter function so that the amount of blurring it induces in a first direction is different from the amount of blurring it induces in a second direction (e.g. the orthogonal direction).

In one embodiment, rendering engine 102 may be configured to assign to each sample a blur indicator which is flexible enough to store a blur magnitude for isotropic blurring and/or directional information for anisotropic blurring. For example, rendering unit 102 may assign the blur magnitude based on the sample's depth and an estimate of the viewer's instantaneous concentration depth, and a blur direction based on the normal component of the sample's velocity as seen on the retina of the viewer's eye(s). Filtering engine 102 may apply isotropic blurring to the sample based on the blur magnitude and anisotropic blurring to the sample based on the blur direction, and combine the isotropically blurred pixel values with the anisotripically blurred pixel values.

A head tracker and eye trackers may be used to control the position and orientation of virtual cameras in the world coordinate system. Thus, the retinal velocity of a sample may be estimated from that component of the sample velocity normal to the direction of view of the virtual camera.

Filtering engine 106 may include a filter evaluation unit which generates a filter coefficient on the basis of a sample's x and y displacements with respect to the filter center.

Encoding the Blur Magnitude

Rendering engine 102 may compute the blur magnitude with N-bits of precision, and encode the blur magnitude into an M-bit blur code value where M is smaller than N. Samples are stored into sample buffer 104 with their blur code values rather than the blur magnitudes. A blur code length M=1 allows only two blur states: i.e. blur or no blur. More generally, a blur code of length M allows $2^M$ blur states. If the blur code length is smaller than some minimum length $M_{min}$, the depth-dependent blur generated by graphics system 100 may appear discontinuous, i.e. the viewer may be able to perceive the discrete jump between consecutive blur states. Thus, in one set of embodiments, the blur code length is greater than or equal to the minimum length $M_{min}$. The value $M_{min}$ may be determined by empirical studies. In one embodiment, the blur code length M may be user controllable. The present invention contemplates a wide variety of values for the blur code length M.

Multi-resolution sample buffer

In one set of embodiments, sample buffer 104 may include two or more sub-buffers. Each sub-buffer operates at a different render array resolution. For example, a first sub-buffer may store samples corresponding to an $M_r x N_r$ render pixel array. The second sub-buffer may store samples corresponding to an $(M_r/2) x (N_r/2)$ render pixel array. In both sub-buffers, the number $N_{s/rp}$ of samples per render pixel may be the same. Thus, when filtering engine 106 accesses a render pixel's worth of samples from the second sub-buffer for filtering, those samples cover an area equal to four render pixels in the first sub-buffer. Filtering engine 106 may be configured to filter samples based on a support region which is fixed in terms of render pixel dimensions regardless of the sub-buffer from which the render pixels are being accessed. For example, in one embodiment, the filter engine 106 operates on a 5 by 5 rectangle of render pixels. Because the fixed filter support covers four times as much image area when accessing samples from the second sub-buffer, filtering engine 106 may advantageously access the second sub-buffer when blur effects are to be generated, and access the first sub-buffer when accurate anti-aliasing is to be performed.

In one embodiment, filtering engine 106 may be configured to compute a first set of color values for a given video pixel based on filtration of the samples from the first sub-buffer, and a second set of color values for the given video output pixel based on filtration of samples from the second-buffer. In both filtrations, filtering engine 106 may access samples corresponding to a fixed support region in terms of render pixels. The final color values for the given video pixel may be generated by combining the corresponding color values from the first set and second set.

Added Mileage from Fixed Set of Adder Trees

As described above, filtering engine 106 scans through the virtual screen space generating virtual pixel positions, and filtering samples in the neighborhood of each virtual pixel position. Thus, filtering engine 106 may include one or more adder trees fast computation of the sums of weighted sample color values. The adder trees may be optimized for a given number of samples assuming a given footprint of render pixels and a given number $N_{s/rp}$ of samples per render pixel. For example, in one embodiment, an adder tree may be configured to support 25* 16 samples corresponding to a footprint of 5 by 5 render pixels and 16 samples per render pixel.

In order to attain more effective blur from the fixed capacity adder tree, filtering engine may access samples from sample buffer 104 with a larger footprint (e.g. twice as large in the horizontal and vertical dimensions), compute sample radii with respect to the filter center for every fourth sample in the larger footprint (i.e. half the samples in each direction), evaluate filter coefficients for these selected samples, weight the sample color values with the corresponding filter coefficients, and feed the weighted sample color values to one or more adder trees.

Other Rendering Pipelines

The present invention contemplates a wide variety of rendering pipeline architectures. Figure 6 presents one embodiment of a rendering pipeline. In a second set of embodiments, rendering engine 102 may subdivide triangles into subtriangles until the subtriangles are smaller than programmable size value (e.g. relative a render pixel). Furthermore, the lighting computation 206 may be deferred until these ultimate triangles are obtained. Lighting intensity values (e.g. color intensity values) and texture values may be computed for the vertices of these ultimate subtriangles. The lighting intensity values and texture values at the vertices of the ultimate subtriangles may then be used to determine color intensity values for supersamples inside each ultimate subtriangle. For example, the lighting intensity values and texture values at the vertices of an ultimate triangle may be combined to determine a single RGB vector for the ultimate triangle. The single RGB vector may be assigned to all supersamples interior to the ultimate triangle. This scheme of using a constant color for the supersamples inside an ultimate triangle is referred to herein as "flat fill".

Variable Optics

In one collection of embodiments, two variable optics systems configured between the viewer's eyes and the display surface may be employed to vary the apparent distance of the display surface with respect to the viewer's eyes.

For example, the two variable optics systems may be packaged into a single unit that may be placed on the head. Each variable optics system may vary the apparent distance to the display surface as seen by the corresponding eye so that the apparent distance agrees with the eye's distance to the intersection point of the ocular rays. The variable optics together with the depth-dependent blurring of objects (based on tracking of the viewer's concentration depth as described above) implies that the viewer may very naturally view virtual objects as he/she would view physical objects in the real world, i.e. the viewer need not unlearn the instinct to optically focus at the intersection point of the ocular rays.

Separate Depth-Dependent Blur for Each Eye

In one set of embodiments, rendering engine 102 may be configured to apply separate depth-dependent blur functions to samples intended for the right eye and sample intended for the left eye. Furthermore, rendering engine 102 may compute the distance of the intersection point of the ocular rays from each of the viewer's eyes. The depth location of the minimum for each blur function may be dynamically updated in response to a tracking of the instantaneous distance of the corresponding eye from the intersection point.

Chromatic Distortion Emulation

The human eye like many other optical systems experiences chromatic aberration. A ray of light impinging on the eye experiences chromatic aberration in passage through the optical elements of the eye (e.g. the cornea and the crystalline lens). The ray separates into a fan of wavelength components by the time it hits the retina. Thus, a cone of light emanating from a source point in space and impinging on the eye may be imaged on the retina as a fuzzy locus of points with distorted color. The amount of chromatic aberration as seen on the retina may be a function of the spatial position of the source point (e.g. with respect to some coordinate system rigidly coupled to the eye) and the physical state of the crystalline lens. The human brain may use changes in the instantaneous pattern of chromatic aberration generated on the retina as a clue that the ocular intersection point P is getting closer to or farther from locking onto an object.

U.S. Patent Application 09/810,112 filed on March 16, 2001, entitled "A Graphics System Configured to Perform Distortion Correction" is herby incorporated by reference in its entirety. This patent application teaches how to configure the filtering engine 106 to correct for chromatic distortions such as chromatic aberration. These teachings may be used in the context of the present invention to generate chromatic distortions, i.e. to generate a pattern of chromatic distortions that the viewer's brain expects to see on the retina for the current position of the intersection point P in space. The red, green, and blue components of a video output pixel may be computed at separate virtual pixel centers in screen space. The distances between the red, green, and blue virtual pixels centers for each video output pixel may be controlled by the chromatic distortion values of one or more samples corresponding to the video output pixel (e.g. one or more samples in the vicinity of the video output pixel).

The chromatic distortion value for each sample may be generated by the rendering engine 102 and stored along with the sample in the sample buffer 104. Rendering engine 102 may determine the chromatic distortion value for each sample based on an evaluation of a chromatic distortion function at the sample's position $(x_S, y_S, z_S)$. Rendering engine 102 may adjust the distortion function so that some feature of the function (e.g. a minimum or a maximum or an inflection point) tracks the instantaneous position of the intersection point P. In one embodiment, rendering engine 102 may compute the difference $z_S - Z_{p/c}(t)$ between the sample's z coordinate and the instantaneous eye-relative concentration depth $Z_{p/c}(t)$, and evaluate a distortion function $D(x_S, y_S, z_S - Z_{p/c}(t))$. Thus, the distortion function shifts in time along the z axis in response to changes in the eye-relative concentration depth $Z_{p/c}(t)$. In one embodiment, rendering engine 102 may maintain two separate distortion functions, i.e. one for each eye. Furthermore, parameters of the distortion function may change based on the instantaneous eye-relative concentration depth $Z_{p/c}(t)$ or other measured parameters. For example, the width of a valley in the distortion function may change as a function of the instantaneous eye-relative concentration depth.

Reduced versions of the distortion function may be used in alternate embodiments. For example, the distortion function D reduces to a one variable function if the x and y dependencies are ignored.

As used herein the term "distortion value" refers to any value that specifies an amount of distortion to be applied by the filtering engine to sample color components to generate pixel color components. Thus, distortion values may include blur magnitude values and chromatic distortion values.

In one set of alternative embodiments, the distortion function D may be a fixed function of the x, y and z coordinates. In other words, the distortion function does not track with motions in intersection point P.

Conclusion

Although the embodiments above have been described in considerable detail, other versions are possible. Numerous variations and modifications will become apparent to those skilled in the art once the above disclosure is fully appreciated. It is intended that the following claims be interpreted to embrace all such variations and modifications. Note the headings used herein are for organizational purposes only and are not meant to limit the description provided herein or the claims attached hereto.

**Claims**

1. A graphical processing system (100) comprising:

    a rendering engine (102) configured to receive a stream of graphics primitives, generate a plurality of sample positions in a two-dimensional field, compute depth values and color values for sample positions interior to the graphics primitives, and assign blur values to the interior sample positions based on the depth values and a concentration depth ($Z_{p/c}$) of a viewer;
    a sample buffer (104) configured to store the blur values and the color values for the interior sample positions of the graphics primitives;
    a filtering engine (106) configured to read the blur values and the color values corresponding to sample positions in a neighbourhood of a current filter center, assign filter coefficients to the sample positions of the neighbourhood based on positional measures of the sample positions with respect to the filter center and the corresponding blur values, multiply the color values of he neighbourhood by the assigned filter coefficients to generate weighted color values, compute a pixel value based on the weighted color values;

    wherein the pixel value is usable to modify the state of a display device.

2. The graphical processing system of claim 1, wherein the rendering engine is configured to assign the blur value to each interior sample based on a blur function of the depth value which attains a minimum at the concentration depth of the viewer.

3. The graphical processing system of claim 1 or claim 2, wherein the rendering engine is configured to dynamically adjust a width of a valley in the blur function based on data selected from the group consisting of: (a) the concentration depth,(b) a pupil diameter, and (c) both the concentration depth and the pupil diameter.

4. The graphical processing system of any preceding claim, wherein the rendering engine is configured receive sensor measurements and compute the concentration depth of the viewer based on the sensor measurements.

5. The graphical processing system of claim 4, wherein the rendering engine is configured to couple to a pair of eye trackers, wherein said sensor measurements include eye orientation information generated by said pair of eye trackers.

6. The graphical processing system of claim 4 or claim 5, wherein the rendering engine is configured to couple to a head tracker, wherein said sensor measurements include measurements of the distance of the viewer's head with respect to a display surface associated with said display device.

7. The graphical processing system of any preceding claim, wherein the filtering engine is configured to assign a filter coefficient to each sample position of the neighbourhood based on evaluation of a filter function having a spatial cutoff frequency defined by the corresponding blur value at the positional measure of the sample position.

8. The graphical processing system of claim 7, wherein the spatial cutoff frequency of the filter function is a decreasing function of the blur value.

9. The graphical processing system of claim 7 or 8, wherein the altering engine is configured to evaluaute the filter function by multiplying the positional measure by a scaling factor determined by the blur value, and evaluating a tabulated function using the scaled positional measure.

10. The graphical processing system of any preceding claim further comprising a first variable optics system configured between a first eye of the viewer and a first display surface (SCR) on which the display device generates video output, wherein the first variable optics system is configured to vary an apparent distance of the display surface relative to the first eye so that the apparent distance equals the distance of the first eye to an ocular intersection point (P).

11. The graphical processing system of Claim 1, wherein
the rendering engine is configured to generate depth values and sample color vectors for a plurality of sample positions, and assign chromatic distortion values to the sample positions based on data comprising the depth values and a concentration depth of a viewer, wherein the sample color vectors include a first color component and second color component for each sample position;
the sample buffer is configured to store the chromatic distortion values and the sample color vectors for the sample positions;
the filtering engine is configured to read the chromatic distortion values and the sample color vectors for the sample positions from the sample buffer, compute a first pixel color for an output pixel by filtering the first color components of the sample color vectors in a first neighbourhood of a first position, compute a second pixel color for the output pixel by filtering the second color components of the sample color vectors in a second neighbourhood of a second position, wherein a distance of separation between the first position and the second position is controlled by the chromatic distortion value; and
the first pixel color and the second pixel colour are usable to generate at least a portion of a displayable image.

12. The graphical processing system of claim 11, wherein the data further comprises the sample positions.

13. The graphical processing system of claim 11 or claim 12 further comprising a sensor interface (108) configured to receive measurements from eye trackers, and the measurements are usable to determine the instantaneous concentration depth.

14. The graphical processing system of any of claims 11 to 13, wherein the rendering engine is configured to compute difference values between the depth values and the concentration depth of the viewer, and to evaluate a chromatic distortion function using the difference values to determine the chromatic distortion values.

15. The graphical processing system of any of claims 11 to 14, wherein the rendering engine is configured to determine one or more features of the chromatic distortion function based on the value of the concentration depth of the viewer.

16. The graphical processing system of Claim 1, wherein:

the rendering engine is configured to generate depth values and distortion values for a plurality of samples in response to measurements of at least an instantaneous concentration depth of a viewer;
the sample buffer is configured to store the depth values and distortion values for the plurality of samples; and
the filtering engine configured to generate pixel color components for an output pixel by filtering corresponding color components of the samples, wherein the distortion values of the samples determine an amount of distortion the filtering engine applies to the sample color components of the samples in a filtration process to generate the pixel color components; and
the output pixel determines at least a portion of a displayable image.

17. The graphical processing system of claim 16 wherein the amount of distortion comprises a displacement between a first color computation position and a second color computation position.

18. The graphical processing system of claim 16 or claim 17, wherein the filtering engine is configured to perform the filtration process by computing a weighted sum of the sample color components to generate the pixel color components for the output pixel, wherein the distortion value for each sample determines the cutoff frequency of a spatial filter which is evaluated to determine a sample weight for the sample in the weighted sum.

19. The graphical processing system of any of claims 16 to 18 further comprising a sensor interface configured to receive measurement data from one or more sensor devices, and to compute the instantaneous concentration depth of the viewer in response to the measurement data.

20. The graphical processing system of any preceding claim, wherein the filtering engine is configured to transmit a video signal which is partially determined by said pixel value to the display device.

21. The graphical processing system of claim 20, wherein the concentration depth of the viewer is repeatedly updated in response to repeated sensor measurements.

22. A computer system comprising:

a display device;

a host computer configured to execute a graphics application program;

a graphics processing system according to any preceding claim coupled to the display device and the host computer, wherein the graphics system is configured to receive a stream of graphics primitives from the host computer in response to execution of the graphics application program.

23. A method for processing graphical data, me method comprising:

receiving a stream of graphics primitives;

generating a plurality of sample positions in a two-dimensional field, and computing depth values and color values for sample positions interior to the graphics primitives;

assigning blur values to the interior sample positions based on the depth values and a concentration depth ($Zp_{/e}$) of a viewer, and storing the blur values and the color values for the interior samples of the graphics primitive in a sample buffer;

subsequently reading the blur values and the color values corresponding to sample positions in a neighbourhood of a current filter center from the sample buffer;

assigning a filter coefficient to each sample position of the neighbourhood based on a positional measure of the corresponding sample position with respect to the filter center and the corresponding blur value;

multiplying each color value of the neighbourhood by the assigned filter coefficient to generate a weighted color value, end computing a pixel value based on the weighted color values.

24. The method of claim 23, wherein said assigning the blur value to each interior sample position comprises evaluating a blur function at the depth value of the interior sample position, wherein the blur function attains a minimum at the concentration depth of the viewer.

25. The method of claim 23 or claim 24, further comprising dynamically adjusting a width of a valley in the blur function based on data selected from the group consisting of: (a) the concentration depth, (b) a pupil diameter, and (c) both the concentration depth or the pupil diameter.

26. The method of any of claims 23 to 25, further comprising receiving sensor measurements and computing the concentration depth of the viewer based on the sensor measurements.

27. The method claim 26, wherein said receiving sensor measurement comprises receiving eye orientation information from a pair of eye trackers.

28. The method of claim 26 or claim 27, wherein said receiving sensor measurements comprises receiving a measurement of the viewer's head relative to a display surface (SCR) associated with the display device.

29. The method of any of claims 23 to 28, wherein said assigning the blur value to each sample position of the neighbourhood comprises evaluating of a filter function having a spatial cutoff frequency defined by the corresponding blur value at the positional measure of the sample position.

30. The method of claim 29, wherein the spatial cutoff frequency of the filter function is a decreasing function of the blur value.

31. The method of claim 29 or claim 30, wherein said evaluating the filter function comprises multiplying the positional measure by a scaling factor determined by the blur value, and evaluating a fundamental function using the scaled positional measure.

**Patentansprüche**

1. Graphikverarbeitungssystem (100), das aufweist:

eine Darstellungsengine (102), die konfiguriert ist, um einen Strom aus graphischen Grundelementen zu empfangen, eine Mehrzahl von Abfragepositionen in einem zweidimensionalen Feld zu erzeugen, Intensitätswerte und Farbwerte für Abfragepositionen im Inneren der graphischen Grundelemente zu berechnen und Unschärfewerte an die inneren Abfragepositionen zuzuweisen basierend auf den Intensitätswerten und einer Konzentrationstiefe ($Z_{p/c}$) eines Betrachters,
einen Abfragepuffer (104), der konfiguriert ist, um die Unschärfewerte und die Farbwerte für die inneren Abfragepositionen der graphischen Grundelemente zu speichern,
eine Filterengine (106), die konfiguriert ist, um die Unschärfewerte und die Farbwerte, die Abfragepositionen in einer Umgebung eines gegenwärtigen Filterzentrums entsprechen, auszulesen, Filterkoeffizienten den Abfragepositionen der Umgebung zuzuweisen und zwar basierend auf Positionsmessungen der Abfragepositionen in Bezug auf das Filterzentrum und die entsprechenden Unschärfewerte, Multiplizieren der Farbwerte der Umgebung mit den zugewiesenen Filterkoeffizienten, um gewichtete Farbkoeffizienten zu erzeugen, Berechnen eines Pixelwertes basierend auf den gewichteten Farbwerten,

wobei der Pixelwert verwendbar ist, um den Zustand einer Anzeigevorrichtung zu modifizieren.

2. Graphikverarbeitungssystem nach Anspruch 1, wobei die Darstellungsengine konfiguriert ist, um den Unschärfewert jeder inneren Abfrage basierend auf einer Unschärfefunktion des Tiefenwertes, die ein Minimum bei der Konzentrationstiefe des Betrachters einnimmt, zuzuweisen.

3. Graphikverarbeitungssystem nach Anspruch 1 oder Anspruch 2, bei dem die Darstellungsengine konfiguriert ist, um dynamisch eine Breite eines Tales in der Unschärfefunktion einzustellen und zwar basierend auf Daten, die ausgewählt sind aus der Gruppe, welche besteht aus: (a) Konzentrationstiefe, (b) Pupillendurchmesser und (c) sowohl Konzentrationstiefe als auch Pupillendurchmesser.

4. Graphikverarbeitungssystem nach einem der vorherigen Ansprüche, bei dem die Darstellungsengine konfiguriert ist, um Sensormessungen zu empfangen und die Konzentrationstiefe des Betrachters basierend auf den Sensormessungen zu berechnen.

5. Graphikverarbeitungssystem nach Anspruch 4, bei dem die Darstellungsengine konfiguriert ist, um ein Augenverfolgerpaar zu koppeln, wobei die Sensormessungen Augenorientierungsinformation beinhalten, die vom Augenverfolgerpaar erzeugt wird.

6. Graphikverarbeitungssystem nach Anspruch 4 oder Anspruch 5, bei dem die Darstellungsengine konfiguriert ist, um einen Kopfverfolger anzuschließen, wobei die Sensormessungen Messungen des Abstandes des Kopfes des Betrachters in Bezug auf eine Anzeigeoberfläche, die mit der Anzeigevorrichtung verknüpft ist, beinhaltet.

7. Graphikverarbeitungssystem nach einem der vorherigen Ansprüche, bei dem die Filterengine konfiguriert ist, um einen Filterkoeffizienten jeder Abfrageposition der Umgebung zuzuweisen und zwar basierend auf der Bewertung einer Filterfunktion mit einer räumlichen Abschneidefrequenz, die von dem korrespondierenden Unschärfewert bei der Positionsmessung der Abfrageposition festgelegt wird.

8. Graphikverarbeitungssystem nach Anspruch 7, bei dem die räumliche Abschneidefrequenz der Filterfunktion eine abfallende Funktion des Unschärfewertes ist.

9. Graphikverarbeitungssystem nach Anspruch 7 oder 8, bei dem die Filterengine konfiguriert ist, um die Filterfunktion durch Multiplizieren der Positionsmessung durch einen Skalierfaktor, der von dem Unschärfewert bestimmt wird, und Werte einer tabellierten Funktion unter Verwendung der skalierten Positionsmessung zu bewerten.

10. Graphikverarbeitungssystem nach einem der vorherigen Ansprüche, das weiterhin aufweist ein erstes variables Optiksystem, das zwischen einem ersten Auge des Betrachters und einer ersten Anzeigefläche (SCR), auf der die Anzeigevorrichtung einen Videoausgang erzeugt, konfiguriert ist, wobei das erste variable Optiksystem konfiguriert ist, um einen sichtbaren Abstand der Anzeigeoberfläche relativ zu dem ersten Auge zu variieren, so daß der sichtbare Abstand gleich dem Abstand des ersten Auges zu einem Okularschnittpunkt (P) ist.

11. Graphikverarbeitungssystem nach Anspruch 1, bei dem
die Darstellungsengine konfiguriert ist, um Intensitätswerte und Abfragefarbvektoren für eine Mehrzahl von Abfragepositionen zu erzeugen und den Abfragepositionen chromatische Störwerte zuzuweisen basierend auf Daten, die Intensitätswerte und eine Konzentrationstiefe eines Betrachters aufweisen, wobei die Abfragefarbvektoren eine erste Farbkomponente und eine zweite Farbkomponente für jede Abfrageposition beinhalten,
der Abfragepuffer konfiguriert ist, um die chromatischen Abweichungswerte und die Abfragefarbvektoren für die Abfragepositionen zu speichern,

die Filterengine konfiguriert ist, um die chromatischen Abweichungswerte und die Abfragefarbvektoren für die Abfragepositionen aus dem Abfragepuffer auszulesen, eine erste Pixelfarbe für ein Ausgangspixel zu berechnen durch Filtern der ersten Farbkomponenten der Abfragefarbvektoren in einer ersten Umgebung einer ersten Position, eine zweite Pixelfarbe für den Ausgangspixel zu berechnen durch Filtern der zweiten Farbkomponenten der Abfragefarbvektoren in einer zweiten Umgebung einer zweiten Position, wobei ein Abstand der Trennung zwischen der ersten Position und der zweiten Position durch den chromatischen Abweichungswert gesteuert wird und die erste Pixelfarbe und die zweite Pixelfarbe verwendbar sind, um zumindest einen Teil eines anzeigbaren Bildes zu erzeugen.

12. Graphikverarbeitungssystem nach Anspruch 11, wobei die Daten weiterhin die Abfragepositionen aufweisen.

13. Graphikverarbeitungssystem nach Anspruch 11 oder Anspruch 12, das weiterhin aufweist eine Sensorschnittstelle (108), die konfiguriert ist, um Messungen von Augenverfolgern zu empfangen und wobei die Messungen verwendbar sind, um die momentane Konzentrationstiefe zu bestimmen.

14. Graphikverarbeitungssystem nach einem der Ansprüche 11 bis 13, bei dem die Darstellungsengine konfiguriert ist, um Differenzwerte zwischen den Intensitätswerten und der Konzentrationstiefe des Betrachters zu berechnen und eine chromatische Abweichungsfunktion zu evaluieren unter Venwendung der Differenzwerte, um die chromatischen Abweichungswerte zu bestimmen.

15. Graphikverarbeitungssystem nach einem der Ansprüche 11 bis 14, bei dem die Darstellungsengine konfiguriert ist, um ein oder mehrere Merkmale der chromatischen Abweichungsfunktion basierend auf dem Wert der Konzentrationstiefe des Betrachters zu bestimmen.

16. Graphikverarbeitungssystem nach Anspruch 1, bei dem:

die Darstellungsengine konfiguriert ist, um Intensitätswerte und Abweichungswerte für eine Mehrzahl von Abfragen in Antwort auf Messungen von zumindest einer momentanen Konzentrationstiefe eines Betrachters zu erzeugen,
der Abfragepuffer ist derart konfiguriert, daß er Intensitätswerte und Abweichungswerte für die Mehrzahl von Abfragen speichert, und
die Filterengine ist konfiguriert, um Pixelfarbkomponenten für ein Ausgangspixel durch Filtern entsprechender Farbkomponenten der Abfragen zu erzeugen, wobei die Abweichungswerte der Abfragen eine Größe der Abweichung bestimmen, die die Filterengine an die Abfragefarbkomponenten der Abfragen in einem Filterprozeß anlegen, um die Pixelfarbkomponenten zu bestimmen, um
das Ausgangspixel zumindest einen Abschnitt eines anzeigbaren Bildes bestimmt.

17. Graphikverarbeitungssystem nach Anspruch 16, bei dem die Menge der Abweichung eine Verrückung zwischen einer ersten Farbberechnungsposition und einer zweiten Farbberechnungsposition aufweist.

18. Graphikverarbeitungssystem nach Anspruch 16 oder Anspruch 17, bei dem die Filterengine konfiguriert ist, um den Filterprozeß durchzuführen durch Berechnen einer gewichteten Summe der Abfragefarbkomponenten, um die Pixelfarbkomponenten für den Ausgangspixel zu erzeugen, wobei der Abweichungswert für jede Abfrage die Abschneidefrequenz eines Raumfilters bestimmt, was bewertet wird, um ein Abfragegewicht für die Abfrage in der gewichteten Summe zu bestimmen.

19. Graphikverarbeitungssystem nach einem der Ansprüche 16 bis 18, das weiterhin aufweist eine Sensorschnittstelle, die konfiguriert ist, um Meßdaten von allen oder mehreren Sensorgeräten zu empfangen und die momentane Konzentrationstiefe des Betrachters in Antwort auf die Meßdaten zu berechnen.

20. Graphikverarbeitungssystem nach einem der vorherigen Ansprüche, bei dem die Filterengine konfiguriert ist, ein Videosignal, das teilweise durch den Pixelwert bestimmt wird, zu der Anzeigevorrichtung zu übertragen.

21. Graphikverarbeitungssystem nach Anspruch 20, bei dem die Konzentrationstiefe des Betrachters wiederholt in Antwort auf wiederholte Sensormessungen aktualisiert wird.

22. Computersystem, das aufweist:

eine Anzeigevorrichtung,

einen Hostcomputer, der konfiguriert ist, ein Graphikanwendungsprogramm auszuführen,

ein Graphikverarbeitungssystem nach einem der vorherigen Ansprüche, das mit der Anzeigevorrichtung und dem Hostcomputer verbunden ist, wobei das Graphiksystem konfiguriert ist, einen Strom aus graphischen Grundelementen von dem Hostcomputer in Antwort auf die Ausführung des Graphikanwendungsprogramms zu empfangen.

23. Verfahren für das Verarbeiten von Graphikdaten, wobei das Verfahren aufweist:

Empfangen eines Stroms aus graphischen Grundelementen,

Erzeugen einer Mehrzahl von Abfragepositionen in einem zweidimensionalen Feld und Berechnen von Intensitätswerten und Farbwerten für Abfragepositionen innerhalb der graphischen Grundelemente,

Zuweisen von Unschärfewerten zu den inneren Abfragepositionen basierend auf den Intensitätswerten und einer Konzentrationstiefe ($Z_{p/e}$) eines Betrachters und Speichern der Unschärfewerte und der Farbwerte für die inneren Abfragen der graphischen Grundelemente in einem Abfragepuffer,

nachfolgendes Auslesen der Unschärfewerte und der Farbwerte entsprechend der Abfragepositionen in einer Umgebung eines gegenwärtigen Filterzentrums aus dem Abfragepuffer,

Zuweisen eines Filterkoeffizienten zu jeder Abfrageposition der Umgebung basierend auf einer Positionsmessung der entsprechenden Abfrageposition in Bezug auf das Filterzentrum und den entsprechenden Unschärfewert,

Multiplizieren jedes Farbwertes der Umgebung mit dem zugewiesenen Filterkoeffizienten, um einen gewichteten Farbwert zu erzeugen, und Berechnen eines Pixelwertes basierend auf den gewichtete Farbwerten.

24. Verfahren nach Anspruch 23, bei dem das Zuweisen des Unschärfewertes zu jeder inneren Abfrageposition das Bewerten einer Unschärfefunktion an dem Tiefenwert der inneren Abfrageposition aufweist, wobei die Unschärfefunktion ein Minimum bei der Konzentrationstiefe des Betrachters einnimmt.

25. Verfahren nach Anspruch 23 oder Anspruch 24, das weiterhin aufweist das dynamische Einstellen einer Breite eines Tales in der Unschärfefunktion basierend auf Daten, die ausgewählt werden aus der Gruppe, welche besteht aus: (a) der Konzentrationstiefe, (b) dem Pupillendurchmesser und (c) sowohl der Konzentrationstiefe als auch dem Pupillendurchmesser.

26. Verfahren nach einem der Ansprüche 23 bis 25, das weiterhin aufweist das Empfangen von Sensormessungen und das Berechnen der Konzentrationstiefe des Betrachters basierend auf Sensormessungen.

27. Verfahren nach Anspruch 26, dem das Empfangen der Sensormessung das Empfangen der Augenorientierungsinformation von einem Augenverfolgungspaar aufweist.

28. Verfahren nach Anspruch 26 oder Anspruch 27, bei dem das Empfangen von Sensormessungen das Empfangen einer Messung des Kopfes des Betrachters relativ zu einer Anzeigenfläche (SCR), die mit der Anzeigenvorrichtung verknüpft ist, aufweist.

29. Verfahren nach einem der Ansprüche 23 bis 28, bei dem das Zuweisen des Unschärfewertes zu jeder Abfrageposition der Umgebung das Bewerten einer Filterfunktion aufweist mit einer räumlichen Abschneidefrequenz, die von dem korrespondierenden Unschärfewert an der Positionsmessung der Abfrageposition festgelegt wird.

30. Verfahren nach Anspruch 29, bei dem die räumliche Abschneidefrequenz der Filterfunktion eine abfallende Funktion des Unschärfewertes ist.

31. Verfahren nach Anspruch 29 oder Anspruch 30, wobei das Bewerten der Filterfunktion das Multiplizieren der Positionsmessung mit einem Skalierungsfaktor aufweist, welcher den Unschärfewert bestimmt, und das Bewerten einer Fundamentalfunktion aufweist unter Verwendung der skalierten Positionsmessung.

**Revendications**

1. Système de traitement graphique (100), comprenant :

un moteur de rendu (102) configuré pour recevoir un train de primitives graphiques, générer une multiplicité de positions d'échantillons dans un champ bidimensionnel, calculer des valeurs de profondeur et des valeurs de couleur pour des positions d'échantillons intérieures aux primitives graphiques, et assigner des valeurs de flou aux positions d'échantillons intérieures, sur la base des valeurs de profondeur et d'une profondeur de concentration ($Z_{p/e}$) d'un observateur ;

un tampon d'échantillons (104) configuré pour stocker les valeurs de flou et les valeurs de couleur pour les positions d'échantillons intérieures des primitives graphiques ;

un moteur de filtrage (106) configuré pour lire les valeurs de flou et les valeurs de couleur correspondant à des positions d'échantillons dans un voisinage d'un centre de filtre présent, assigner des coefficients de filtre aux positions d'échantillons du voisinage, sur la base de mesures de position des positions d'échantillons par rapport au centre de filtre et des valeurs de flou correspondantes, multiplier les valeurs de couleur du voisinage par les coefficients de filtre assignés, pour générer des valeurs de couleur pondérées, calculer une valeur de pixel sur la base des valeurs de couleur pondérées ;

dans lequel la valeur de pixel est utilisable pour modifier l'état d'un dispositif de visualisation.

**2.** Système de traitement graphique selon la revendication 1, dans lequel le moteur de rendu est configuré pour assigner la valeur de flou à chaque échantillon intérieur sur la base d'une fonction de flou de la valeur de profondeur qui atteint un minimum à la profondeur de concentration de l'observateur.

**3.** Système de traitement graphique selon la revendication 1 ou la revendication 2, dans lequel le moteur de rendu est configuré pour régler de façon dynamique une largeur d'une vallée dans la fonction de flou, sur la base de données sélectionnées dans le groupe constitué de : (a) la profondeur de concentration, (b) un diamètre de pupille, et (c) à la fois la profondeur de concentration et le diamètre de pupille.

**4.** Système de traitement graphique selon l'une quelconque des revendications précédentes, dans lequel le moteur de rendu est configuré pour recevoir des mesures de capteurs et pour calculer la profondeur de concentration de l'observateur sur la base des mesures de capteurs.

**5.** Système de traitement graphique selon la revendication 4, dans lequel le moteur de rendu est configuré pour être couplé à une paire de suiveurs oculaires, dans lequel les mesures de capteurs incluent une information d'orientation d'yeux générée par la paire de suiveurs oculaires.

**6.** Système de traitement graphique selon la revendication 4 ou la revendication 5, dans lequel le moteur de rendu est configuré pour être couplé à un suiveur de tête, dans lequel les mesures de capteurs incluent des mesures de la distance de la tête de l'observateur par rapport à une surface de visualisation associée au dispositif de visualisation.

**7.** Système de traitement graphique selon l'une quelconque des revendications précédentes, dans lequel le moteur de filtrage est configuré pour assigner un coefficient de filtre à chaque position d'échantillon du voisinage, sur la base de l'évaluation d'une fonction de filtre ayant une fréquence spatiale de coupure définie par la valeur de flou correspondante à la mesure de position de la position d'échantillon.

**8.** Système de traitement graphique selon la revendication 7, dans lequel la fréquence spatiale de coupure de la fonction de filtre est une fonction décroissante de la valeur de flou.

**9.** Système de traitement graphique selon la revendication 7 ou 8, dans lequel le moteur de filtrage est configuré pour évaluer la fonction de filtre en multipliant la mesure de position par un facteur d'échelle déterminé par la valeur de flou, et en évaluant une fonction tabulée en utilisant la mesure de position mise à l'échelle.

**10.** Système de traitement graphique selon l'une quelconque des revendications précédentes, comprenant en outre un premier système optique variable établi entre un premier oeil de l'observateur et une première surface de visualisation (SCR) sur laquelle le dispositif de visualisation génère une information de sortie vidéo, dans lequel le premier système optique variable est configuré pour faire varier une distance apparente de la surface de visualisation par rapport au premier oeil, de façon que la distance apparente soit égale à la distance du premier oeil à un point d'intersection oculaire (P).

**11.** Système de traitement graphique selon la revendication 1, dans lequel le moteur de rendu est configuré pour générer des valeurs de profondeur et des vecteurs de couleur d'échantillons pour une multiplicité de positions d'échantillons, et assigner des valeurs de distorsion chromatique aux positions d'échantillons, sur la base de données comprenant les valeurs de profondeur et une profondeur de concentration d'un observateur, dans lequel les vecteurs de couleur d'échantillons comprennent une première composante de couleur et une seconde composante de couleur pour chaque position d'échantillon ;

le tampon d'échantillons est configuré pour stocker les valeurs de distorsion chromatique et les vecteurs de couleur d'échantillons pour les positions d'échantillons ;

le moteur de filtrage est configuré de façon à lire dans le tampon d'échantillons les valeurs de distorsion chromatique et les vecteurs de couleur d'échantillons pour les positions d'échantillons, calculer une première couleur de pixel pour un pixel de sortie en filtrant les premières composantes de couleur des vecteurs de couleur d'échantillons dans un premier voisinage d'une première position, calculer une seconde couleur de pixel pour le pixel de sortie en filtrant les secondes composantes de couleur des vecteurs de couleur d'échantillons dans un second voisinage d'une seconde position, une distance de séparation entre la première position et la seconde position étant commandée par la valeur de distorsion chromatique ; et

le premier pixel de couleur et le second pixel de couleur sont utilisables pour générer au moins une partie d'une image pouvant être visualisée.

**12.** Système de traitement graphique selon la revendication 11, dans lequel les données comprennent en outre les positions d'échantillons.

**13.** Système de traitement graphique selon la revendication 11 ou la revendication 12, comprenant en outre une interface de capteurs (108) configurée pour recevoir des mesures à partir de suiveurs oculaires, et les mesures sont utilisables pour déterminer la profondeur de concentration instantanée.

**14.** Système de traitement graphique selon l'une quelconque des revendications 11 à 13, dans lequel le moteur de rendu est configuré pour calculer des valeurs de différence entre les valeurs de profondeur et la profondeur de concentration de l'observateur, et pour évaluer une fonction de distorsion chromatique en utilisant les valeurs de différence afin de déterminer les valeurs de distorsion chromatique.

**15.** Système de traitement graphique selon l'une quelconque des revendications 11 à 14, dans lequel le moteur de rendu est configuré pour déterminer une ou plusieurs caractéristiques de la fonction de distorsion chromatique sur la base de la valeur de la profondeur de concentration de l'observateur.

**16.** Système de traitement graphique selon la revendication 1, dans lequel :

le moteur de rendu est configuré pour générer des valeurs de profondeur et des valeurs de distorsion pour une multiplicité d'échantillons en réponse à des mesures d'au moins une profondeur de concentration instantanée d'un observateur ;

le tampon d'échantillons est configuré pour stocker les valeurs de profondeur et les valeurs de distorsion pour la multiplicité d'échantillons ; et

le moteur de filtrage est configuré pour générer des composantes de couleur de pixel pour un pixel de sortie en filtrant des composantes de couleur correspondantes des échantillons, les valeurs de distorsion des échantillons déterminant un niveau de distorsion que le moteur de filtrage applique aux composantes de couleur d'échantillons des échantillons dans un processus de filtrage pour générer les composantes de couleur de pixel ; et

le pixel de sortie détermine au moins une partie d'une image pouvant être visualisée.

**17.** Système de traitement graphique selon la revendication 16, dans lequel le niveau de distorsion comprend un déplacement entre une première position de calcul de couleur et une seconde position de calcul de couleur.

**18.** Système de traitement graphique selon la revendication 16 ou la revendication 17, dans lequel le moteur de filtrage est configuré pour effectuer le processus de filtrage en calculant une somme pondérée des composantes de couleur d'échantillons, pour générer les composantes de couleur de pixel pour le pixel de sortie, dans lequel la valeur de distorsion pour chaque échantillon détermine la fréquence de coupure d'un filtre spatial qui est évaluée de façon à déterminer un poids d'échantillon pour l'échantillon dans la somme pondérée.

**19.** Système de traitement graphique selon l'une quelconque des revendications 16 à 18, comprenant en outre une interface de capteur configurée pour recevoir des données de mesure provenant d'un ou plusieurs dispositifs capteurs, et pour calculer la profondeur de concentration instantanée de l'observateur en réponse aux données de mesure.

**20.** Système de traitement graphique selon l'une quelconque des revendications précédentes, dans lequel le moteur de filtrage est configuré pour émettre vers le dispositif de visualisation un signal vidéo qui est déterminé partiellement par la valeur de pixel.

**21.** Système de traitement graphique selon la revendication 20, dans lequel la profondeur de concentration de l'observateur est actualisée de façon répétée en réponse à des mesures de capteurs répétées.

**22.** Système d'ordinateur comprenant :

un dispositif de visualisation ;
un ordinateur hôte configuré pour exécuter un programme d'application graphique ;
un système de traitement graphique selon l'une quelconque des revendications précédentes, couplé au dispositif de visualisation et à l'ordinateur hôte, dans lequel le système graphique est configuré pour recevoir un train de primitives graphiques à partir de l'ordinateur hôte, en réponse à l'exécution du programme d'application graphique.

**23.** Procédé pour traiter des données graphiques, le procédé comprenant les étapes consistant à :

recevoir un train de primitives graphiques ;
générer une multiplicité de positions d'échantillons dans un champ bidimensionnel et calculer des valeurs de profondeur et des valeurs de couleur pour des positions d'échantillons intérieures aux primitives graphiques ;
assigner des valeurs de flou aux positions d'échantillons intérieures, sur la base des valeurs de profondeur et d'une profondeur de concentration ($Z_{p/e}$) d'un observateur, et stocker dans un tampon d'échantillons les valeurs de flou et les valeurs de couleur pour les échantillons intérieurs de la primitive graphique ;
lire ensuite dans le tampon d'échantillons les valeurs de flou et les valeurs de couleur correspondant à des positions d'échantillons dans un voisinage d'un centre de filtre présent ;
assigner un coefficient de filtre à chaque position d'échantillon du voisinage, sur la base d'une mesure de position de la position d'échantillon correspondante par rapport au centre de filtre et à la valeur de flou correspondante ;
multiplier chaque valeur de couleur du voisinage par le coefficient de filtre assigné pour générer une valeur de couleur pondérée, et calculer une valeur de pixel sur la base des valeurs de couleur pondérées.

**24.** Procédé selon la revendication 23, dans lequel l'assignation de la valeur de flou à chaque position d'échantillon intérieure comprend l'évaluation d'une fonction de flou à la valeur de profondeur de la position d'échantillon intérieure, dans lequel la fonction de flou atteint un minimum à la profondeur de concentration de l'observateur.

**25.** Procédé selon la revendication 23 ou la revendication 24, comprenant en outre le réglage dynamique d'une largeur d'une vallée dans la fonction de flou, sur la base de données sélectionnées dans le groupe consistant en : (a) la profondeur de concentration, (b) un diamètre de pupille, et (c) à la fois la profondeur de concentration et le diamètre de pupille.

**26.** Procédé selon l'une quelconque des revendications 23 à 25, comprenant en outre la réception de mesures de capteurs et le calcul de la profondeur de concentration de l'observateur d'après les mesures de capteur.

**27.** Procédé selon la revendication 26, dans lequel la réception de mesures de capteurs comprend la réception d'une information d'orientation d'yeux provenant d'une paire de suiveurs oculaires.

**28.** Procédé selon la revendication 26 ou 27, dans lequel la réception de mesures de capteurs comprend la réception d'une mesure de la tête de l'observateur par rapport à une surface de visualisation (SCR) associée au dispositif de visualisation.

**29.** Procédé selon l'une quelconque des revendications 23 à 28, dans lequel l'assignation de la valeur de flou à chaque position d'échantillon du voisinage comprend l'évaluation d'une fonction de filtre ayant une fréquence spatiale de coupure définie par la valeur de flou correspondante à la mesure de position de la position d'échantillon.

**30.** Procédé selon la revendication 29, dans lequel la fréquence spatiale de coupure de la fonction de filtre est une fonction décroissante de la valeur de flou.

**31.** Procédé selon la revendication 29 ou la revendication 30, dans lequel l'évaluation de la fonction de filtre comprend la multiplication de la mesure de position par un facteur d'échelle déterminé par la valeur de flou, et l'évaluation d'une fonction fondamentale en utilisant la mesure de position mise à l'échelle.

Fig. 1A

Fig. 1B

Fig. 2A

Fig. 2B

3D Graphics Data

Fig. 3

Fig. 4

Fig. 5

EP 1 330 785 B1

receive graphics data  202

modeling transform  204

compute lighting  206

camera transform  208

homogeneous perspective transform  209

clip primitive with respect to a canonical view volume  210

perspective divide  211

perform render scale transform  212

identify candidate render pixels which intersect with primitive  214

For each candidate render pixel: determine color intensity values at any sample positions which are interior to the candidate render pixel and the primitive  216

compute a blur magnitude value for each interior sample based on the instantaneous concentration depth and the sample's z depth  217

store the sample values and corresponding blur values for the interior sample positions in sample buffer  218

Fig. 6

$Y_v$

$N_r = 5$

| | | | | | | | |
|---|---|---|---|---|---|---|---|
| P1 | P2 | P3 | P4 V3 | P5 | P6 | P7 | P8 |
| P9 | P10 | P11 | P12 | P13 | P14 | P15 V2 | P16 |
| P17 | P18 | P19 V1 | P20 | P21 | P22 | P23 | P24 |
| P25 | P26 | P27 | P28 | P29 | P30 | P31 | P32 |
| P33 | P34 | P35 | P36 | P37 | P38 | P39 | P40 |

(0,0)

$M_r = 8$

$X_v$

Fig. 7

EP 1 330 785 B1

33

Fig. 8

Blur
Function

W

$Z_s$        $Z_{p/s}(t)$        $Z_{viewer}$

$Z_{p/e}(t)$

Z

Fig. 9A

Blur
Function

$Z_{p/s}(t)$        $Z_{viewer}$

$Z_{p/e}(t)$

Z

Fig. 9B

Receive Address of a Candidate
Render Pixel From Step 214 — 216A

Texture
Active?
216B

No

Yes

compute set of sample
positions in candidate
render pixel 216D

access texture memory
to determine one or more
texture values 216C

determine which sample
positions reside interior to the
current primitive 216E

compute color intensity values at the interior sample
positions based on vertex color values (and the one
or more texture values if present) 216F

To Step 217

Fig. 10

Fig. 11

Fig. 12A

Virtual Pixel Position

Typical Render Pixel populated with Rendered Samples

Filter Support

$X_v$

$Y_v$

Fig. 12B